# EUROPÄISCHE PATENTANMELDUNG

(11) **EP 1 509 041 A1**
(43) Veröffentlichungstag der Anmeldung: **23.02.2005**
(21) Anmeldenummer: 03018860.1
(22) Anmeldetag: 19.08.2003
(51) Int. Cl.: H04N 5/44, H04N 5/445

(54) **Multifunktionsgerät zur Audio/Videosignal-Verarbeitung**

(71) Anmelder: Medion AG, 45127 Essen (DE)
(72) Erfinder: Reineke, Andreas, 33100 Paderborn (DE)
(74) Vertreter: Grünecker, Kinkeldey, Stockmair & Schwanhäusser Anwaltssozietät

(57) **Zusammenfassung**

Die Erfindung betrifft ein Audio/Videosignal-Verarbeitungsgerät, das in kompakter Weise eine Vielzahl von herkömmlichen Konsumerelektronikgeräten in ein Gerät integriert. Durch die Integration der Mehrzahl von Geräten bzw. Anwendungen in einem Gehäuse mit gemeinsamer Nutzung unterschiedlicher Speichermedien werden zum ersten Mal für viele der Anwendungen neue Nutzungsmöglichkeiten erschlossen. Durch die einheitliche Verwendung von Speichermedien, zentraler Recheneinheit, elektrischer Kommunikationsschnittstelle und der Benutzerschnittstelle kann der Hardwareaufwand minimiert und die Bedienerfreundlichkeit durch eine einheitliche Benutzeroberfläche deutlich verbessert werden. Der modulare Aufbau der Anwendungsfunktionen ermöglicht eine kostengünstige und flexible Anpassung an neue Technologien und neue Standards. Zudem ist die Gerätekonfiguration in einfacher Weise an lokale Gegebenheiten anpassbar.

## Beschreibung

Die vorliegende Erfindung betrifft ein Multifunktionsgerät zur Verarbeitung von Audiound Videosignalen. Insbesondere betrifft die Erfindung ein AudioNideosignal-Verarbeitungsgerät, das eine Mehrzahl von verschiedenen Audio- und Videosignalverarbeitungsoperationen in einem einzigen Gerät vereint.

In den letzten Jahren haben sich im Bereich der Konsumelektronik eine Vielzahl neuer technischer Entwicklungen am Markt durchgesetzt. Diese Entwicklung ist insbesondere auf die zunehmende Digitalisierung in allen Bereichen der Konsumelektronik zurückzuführen. Die Digitalisierung ermöglicht auf der Basis neuer Speichertechnologien und Übertragungsverfahren neue Unterhaltungsdienstleistungen zu kostengünstigeren Preisen bei gleichzeitig höherer Qualität.

Obwohl die neuen Technologien dem Verbraucher eine höhere Qualität bei niedrigeren Preisen und besserer Handhabbarkeit anbieten, können sie die alten Technologien noch nicht vollständig ersetzen. Zudem gibt es keine Konsumelektronikgeräte, die Inhalte der alten Datenträger einlesen und in neue digitale Formate konvertieren und archivieren können. Der Verbraucher muss daher heutzutage Konsumelektronikgeräte alter und neuer Technologien nebeneinander bereithalten, um tatsächlich von den neuen Möglichkeiten profitieren zu können, ohne auf vorhandene Datenbestände verzichten zu müssen. Zudem hat sich bei neuen Technologien häufig zunächst noch kein einheitlicher Standard durchgesetzt, so dass parallel verschiedene Varianten einer neuen Technologie nebeneinander existieren. Auch aus diesem Grund muß der Verbraucher heutzutage eine Vielzahl unterschiedlicher Geräte zu hause bereithalten, oft sogar für dieselbe Anwendung.

Während vor 20 Jahren der Verbraucher mit einem Schallplattenspieler, einem Kassettengerät, einem Radio, einem Fernsehgerät und einem Videorekorder vollständig ausgerüstet war, so hat sich heute die Anzahl der Geräte vervielfacht. Der Übergang vom analogen auf das digitale Fernsehen steckt noch in den Anfängen. Deshalb ist gleichzeitig die Vorhaltung von Fernsehgeräten mit analogen und digitalen Fernsehtunern/Empfängern erforderlich. Bei den Video- und Audiodatenaufzeichnungsgeräten besteht eine große Vielfalt neuer und nicht mehr ganz so neuer Technologien nebeneinander. Bei den optischen Speichermedien existieren die Compactdisc (CD) und die DVD nebeneinander, wobei die nächste Generation einer Highdensity (HD)-DVD schon vor der Einführung steht. Bei der Aufzeichnung von Daten auf diesen optischen Speichermedien stehen inkompatible Standards unterschiedlicher Unternehmenskonsortien nebeneinander zur Verfügung. Als magnetisches Speichermedium werden Bandaufzeichnungsgeräte mehr und mehr vom Markt verdrängt, wohingegen sich die Aufzeichnung auf Magnetplatten in Form von Festplatten und optischen Medien wie beschreibbaren CDs oder DVDs zunehmend durchsetzt. Daneben entstehen in großer Vielfalt Standards für Speicherkarten. Diese Speicherkarten basieren auf der Flash-Speichertechnologie, die ohne mechanisch bewegliche Komponenten auskommt und in der Lage ist, bei geringer Größe eine große Anzahl von Daten zu speichern. Insbesondere findet diese Speichertechnologie bei der digitalen Fotografie und im digitalen Audiobereich Anwendung. Mit Hilfe der Speicherkarten lassen sich die Bild- und Audiodaten in einfacher Weise transportieren. Es ist nur eine Frage der Zeit bis die Kapazitäten der Flashspeichermodule ausreichen um auch Videodaten zu speichern.

Die geschilderte Gerätevielfalt hat den Nachteil, dass der Verbraucher eine entsprechend große Anzahl von Geräten erwerben muss, wenn er an den Möglichkeiten der neuen Technologien teilhaben möchte. Eine solche Vielzahl sprengt im Allgemeinen jedoch den zu hause zur Verfügung stehenden Raum. Zudem muss sich der Verbraucher jeweils mit der Bedienung jedes neuen Gerätes vertraut machen und eine zusätzliche Bedieneinheit, in der Regel eine Fernbedienung, bereithalten.

Zur Lösung dieser Probleme werden bisher unterschiedliche Ansätze verfolgt. Das Problem der Vielzahl von Fernbedienungen, die auf einer Infrarotübertragung basieren, kann durch sogenannte Allzweckfernbedienungen gelöst werden. Solche Fernbedienungen lernen die den einzelnen Geräten und Operationen zugeordneten Infrarot-Kommandos, um sie in einer einzigen Fernbedienung zusammenzufassen. Auf diese Weise sind jedoch weder die Probleme der teilweise sehr unterschiedlichen Bedienungskonzepte der Geräte, noch das Platzproblem für den Verbraucher gelöst. Außerdem gehen Spezialfunktionen einiger Geräte verloren, die nur über spezielle Tasten erreichbar sind.

Andere Hersteller haben zur Lösung dieses Problems die einzelnen Konsumerelektronik-Komponenten in der Größe deutlich verkleinert und sie zu "Mini-Anlagen" zusammengestellt. Die gesamte Anlage ist mit einer Fernbedienung steuerbar. Eine spätere Anpassung an neue Technologien ist jedoch nur in den seltensten Fällen möglich. In der Regel muß die Anlage als ganzes durch eine neue ersetzt werden.

Andere Hersteller haben die einzelnen Konsumerelektronik-Geräte zum Teil in einem Gerät integriert, beispielsweise einen Rundfunkempfänger mit einem Verstärker, teilweise auch zusätzlich kombiniert mit einem CD-Spieler und/oder einem Kassettenrekorder. Solche Kombinationsgeräte sind jedoch aufwendig in der Herstellung und noch weniger leicht an neue Technologieentwicklungen und Marktbedürfnisse anpassbar.

Aufgabe der Erfindung ist es, ein Audio/Videoverarbeitungsgerät anzugeben, das bei einfacher Bauweise die obengenannten Nachteile vermeidet.

Diese Aufgabe wird mit den Merkmalen des Anspruches 1 gelöst.

Bevorzugte Ausführungsformen der Erfindung sind Gegenstand der Unteransprüche.

Das erfindungsgemäße Audio/Videosignal-Verarbeitungsgerät fasst eine Mehrzahl verschiedener Audio- und/oder Videosignalverarbeitungsoperationen in einem Gehäuse zusammen. Das Gerät umfaßt eine Zentraleinheit, eine Bedieneinheit und eine Mehrzahl in dem Gehäuse vorgesehener Signalverarbeitungsmodule für Audio/Videosignalverarbeitungsoperationen. Die Zentraleinheit des Gerätes umfasst einen Prozessor, eine Archivierungseinrichtung, eine Mensch-Maschine-Schnittstelle und eine I/O-Kommunikationsschnittstelle. Der Prozessor führt Audio- und/oder Videosignalrechneroperationen für von einem Signalverarbeitungsmodul zugeführten Audio- und/oder Videosignal in Abhängigkeit von der von dem Signalverarbeitungsmodul angeforderten Rechneroperation aus. Die Archivierungseinrichtung dient zur Speicherung von Audio- und Videosignalen. Die Mensch-Maschine-Schnittstelle enthält eine Einrichtung zur Erzeugung eines Anzeigesignals für eine visuelle Benutzerführung für die Audio- und/oder Videosignalverarbeitungsoperationen der Mehrzahl von Signalverarbeitungsmodulen, eine Einrichtung zur Erfassung von Benutzeroperationen von der Bedieneinheit zur Steuerung der Audio- und/oder Videosignalverarbeitung und eine Einrichtung zur entsprechenden Ansteuerung eines der Mehrzahl von Signalverarbeitungsmodulen. Die I/O-Kommunikationsschnittstelle kann zu verarbeitende Audio- und/oder Videosignale empfangen und Audio- und/oder Videosignale einschließlich des Anzeigesignals für die visuelle Benutzerführung an eine an die I/O-Kommunikationsschnittstelle anschließbare Wiedergabevorrichtung ausgeben.

Herkömmliche Konsumerelektronikgeräte basieren auf spezialisierter Hardware, die jeweils nur zur Durchführung der individuellen Konsumerelektronikgerät-Funktionalität in der Lage ist, für die sie entwickelt wurde. Im Gegensatz dazu basiert das Audio/Videosignal-Verarbeitungsgerät der Erfindung auf einem leistungsfähigen, nicht spezialisierten Prozessor, der eine Vielzahl von Audio- und Videorechenoperationen anstelle einer entsprechenden Vielzahl spezialisierter Hardware-Geräte übernimmt. Durch diesen nicht spezialisierten Hardwareansatz kann die Rechenleistung des Prozessors allen Geräten, die in dem Audio/Videosignal-Verarbeitungsgerät zur Verfügung gestellt werden. Der erfindungsgemäße Ansatz ermöglicht, einen großen Umfang unterschiedlicher Konsumerelektronik-Funktionalitäten in einem Gerät zu integrieren.

Auf diese Weise ist die Erfindung in der Lage, eine Mehrzahl herkömmlicher Konsumelektronikgeräte in einem einzigen Gerät mit geringen Abmessungen zu realisieren. Dies wird insbesondere über eine einzige Bedienschnittstelle und eine einzige zentrale Recheneinheit mit einer Archivierungseinrichtung erreicht. Mit Hilfe der einsetzbaren Module werden die zusätzlich für die Simulation der jeweiligen Konsumelektronikgeräte erforderlichen Funktionen bereitgestellt und die zentrale Recheneinheit entsprechend angesteuert. Mit der Mehrzweckrecheneinheit und einer für die jeweilige Konsumelektronikanwendung entsprechende Hard- und/oder Softwareergänzung sind die meisten Konsumelektronikgeräte mit minimalem Aufwand realisierbar.

Mit dem erfindungsgemäßen Audio/Videosignal-Verarbeitungsgerät lassen sich auch herkömmliche Interaktionen zwischen verschiedenen Geräten in einfacher Weise realisieren. Beispielsweise kann ein von einem Fernsehmodul empfangenes Fernsehsignal auf der Archivierungseinrichtung oder über ein Aufzeichnungsmodul auf einer optischen Platte aufgezeichnet werden. Da mit diesem Gerät in bisher nicht gekannter Weise unterschiedliche Audio- und Videosignalverarbeitungsoperationen in einem Gerät integriert sind, lassen sich auch völlig neue Interaktionen zwischen den Signalverarbeitungsmodulen realisieren.

Neben einem minimalen Platzbedarf stellt die Erfindung eine einheitliche Benutzerführung für die Vielzahl von Geräten bereit. Insbesondere kann durch Ergänzung oder Austausch eines Moduls das Gerät an neue Technologien in einfacher Weise angepasst werden. Dabei integriert sich die neue Funktionalität automatisch in die bestehende Benutzerführung. Es besteht somit kein zusätzlicher Erklärungsbedarf für den Verbraucher bei Integration neuer Konsumelektronikfunktionalitäten.

Zudem kann der Benutzer bestehende Konsumelektronikgeräte in einfacher Weise über die analogen und/oder digitalen Schnittstellen in die AudioNideosignal-Verarbeitung der vorliegenden Erfindung integrieren.

Mit Hilfe des modulartigen Aufbaus sind Video- und Audiodaten aller gängigen Standards verarbeitbar.

Die vorliegende Erfindung ermöglicht somit, ein kostengünstiges, platzsparendes und flexibel anpassbares Audio/Videosignal-Verarbeitungsgerät.

Gemäß einer bevorzugten Ausführungsform weist die I/O-Kommunikationsschnittstelle Anschlüsse für zumindest einen einer Mehrzahl verschiedener digitaler und analoger Schnittstellenstandards wie PCI, USB, SPDIF, Firewire, analog Audio In/Out und Analog Video In/Out auf. Die Kommunikationsschnittstelle integriert auf diese Weise sowohl externe Geräte, die der Verbraucher an das erfindungsgemäße Gerät anschließen möchte, als auch die in das Gehäuse eingesetzten Module in einfacher Weise.

Vorzugsweise werden die Anschlüsse der I/O-Kommunikationsschnittstelle, die eine dauernde Geräteverbindung ermöglichen sollen, auf der Gehäuserückseite angeordnet, wohingegen Anschlüsse für eine Geräteverbindung nur vorübergehender Dauer auf der Gehäusevorderseite angeordnet sind. Auf diese Weise lässt sich die Anzahl der Anschlüsse an der Gerätevorderseite minimieren, ohne dem Verbraucher den vorübergehenden Anschluss einzelner externer Geräte unnötig zu erschweren. Insbesondere sind an der Gerätevorderseite Steckplätze für Speicherkarten vorgesehen.

Das Anzeigesignal für die visuelle Benutzerführung stellt eine Auflistung von Auswahloptionen für die Bedienung des Multifunktionsgerätes dar. Über diese eindimensionale Auswahllisten kann der Benutzer in einfacher Weise die von ihm gewünschte Option auswählen und dabei durch verschiedene Hierarchiestufen navigieren. Auf diese Weise ist beispielsweise das von dem erfindungsgemäßen Gerät zu realisierende Konsumelektronikgerät und dessen jeweilige Operation auswählbar. So ist beispielsweise ein Fernsehkanal auszuwählen, wenn das Fernsehmodul aktiv ist. Eine solche eindimensionale Auswahl ist für den Benutzer intuitiv ohne Erklärungsbedarf verständlich. Über eine solche Liste lassen sich Geräte, Inhalte (Bilder, MP3-Dateien, TV-Kanäle), Aktionen, Einstellungen usw. auswählen.

Zur Erzeugung des Anzeigesignals wird vorzugsweise ein On-Screen-Display verwendet. Mit einem solchen On-Screen-Display können die Auswahloptionen in einfacher und kostengünstiger Weise in ein Bildschirmsignal umgesetzt werden.

Über eine Bedieneinheit, die vorzugsweise eine Fernbedienung ist, wird eine der angezeigten Auswahloptionen selektiert. Zu diesem Zweck enthält die Fernbedienung vorzugsweise ein manuell bedienbares Drehrad oder manuell bedienbare Scroll-Tasten. Zusätzlich ist eine Auswahltaste vorgesehen, mit der die selektierte Option aktivierbar ist. Auf diese Weise lässt sich die Fernbedienung mit dem Daumen einer Hand bedienen, ohne dass der Benutzer seinen Blick vom Wiedergabemonitor des Anzeigesignals auf die Fernbedienung zur Auswahl der richtigen Taste wenden muss. Über das Drehrad oder die Scroll-Tasten lässt sich in einfacher Weise die jeweils selektierte Auswahloption variieren und mit der Auswahltaste bestätigen bzw. aktivieren. Über die einfach aufgebaute Bedieneinheit ohne eine aufwändige Tastatur oder Zeigereinrichtung ist eine besonders leichte Bedienung auch durch unerfahrene Benutzer erreichbar. So lassen sich auch von den meisten Benutzern aufgrund der Umständlichkeit der Bedienung herkömmlich nicht verwendete Funktionalitäten in einfacher Weise einem großen Anwenderkreis erschließen.

Durch die Verwendung derselben visuellen Benutzerführung über eindimensionale Auswahllisten für alle einsetzbaren Module ist die Bedienung des Multifunktionsgerätes für den Benutzer intuitiv verständlich und zusätzlicher Erklärungsbedarf auch bei Integration neuer Geräte nicht erforderlich.

Die Mensch/Maschine-Schnittstelle setzt von der Bedieneinheit empfangene Signale in Abhängigkeit von dem jeweils aktiven Signalverarbeitungsmodul in modulspezifische Steuerungsbefehle um. Die Information über das jeweils aktive Signalverarbeitungsmodul ist vorzugsweise in einem Statusregister gespeichert. Die einheitliche Benutzerführung kann so in einfacher Weise in die jeweils erforderlichen Ansteuersignale umgesetzt werden.

Vorzugsweise ist das Gerät mit einem Prozessorlüfter zur Anströmung und entsprechenden Kühlung des Prozessors mit Luft ausgestattet. Die von dem Prozessorlüfter angesaugte Luft wird diesem vorzugsweise von außen zugeführt. Die Abwärme aller in dem Multifunktionsgerät angeordneten Komponenten bewirkt eine um etwa 10°C über der Außentemperatur liegende Temperatur der Luft innerhalb des Gerätes. Durch die Zuführung von Außenluft kann eine effizientere Kühlung des Prozessors, der anspruchsvollsten Komponente des Gerätes, erreicht werden. Bei gleicher Kühlwirkung kann über diese Maßnahme der erforderliche Luftdurchsatz vermindert werden, vorzugsweise über eine Reduzierung der Umdrehungszahl des Lüfters, um die Geräuschentwicklung niedrig zu halten.

Durch Verwendung eines Luftschachts mit konischer Form zur Anströmung des Prozessor kann ein Prozessorlüfter mit großem Querschnitt für einen Prozessor mit kleinerem Querschnitt verwendet werden. Aufgrund des größeren Lüfterquerschnitts lässt sich derselbe Luftdurchsatz mit niedrigerer Umdrehungszahl und damit geringerer Geräuschentwicklung erreichen.

Für den Lüfter gibt es eine elektronische Drehzahlreglung. Die Führungsgröße ist die Chiptemperatur der CPU. Mit der Lüfterreglung wird sichergestellt, dass der Lüfter nur so schnell wie nötig läuft. Sie sorgt dafür, dass die CPU nicht außerhalb der Grenzen ihrer thermischen Spezifikation betrieben wird.

Gemäß einer bevorzugten Ausführungsform der Erfindung sind die mechanischen Laufwerke des Multifunktionsgerätes über Dämpfungselemente an dem Gehäuse befestigt. Mit dieser Maßnahme wird vermieden, dass sich Vibrationen auf das Gehäuse übertragen können. Solche Vibrationen können durch die Rotationsbewegung und eine Unwucht der bewegten Massen in dem Laufwerk hervorgerufen werden. Durch die Dämpfung können sich Vibrationen nicht über das Gehäuse als Resonanzkörper störend bemerkbar machen.

Die Dämpfungselemente sind vorzugsweise aus Gummi hergestellt. Dabei werden die mechanischen Laufwerke vorzugsweise über eine an dem mechanischen Laufwerk befestigte Kunststoffschiene in einen Aufnahmeschacht des Gehäuses eingesetzt, wobei die Kunststoffschiene über Gummipuffer an dem Laufwerk befestigt ist. Durch diese einfache Maßnahme kann wirkungsvoll die Übertragung von Vibrationen von den mechanischen Laufwerken auf das Gehäuse unterbunden werden, und zwar insbesondere dadurch, dass es keine mechanisch feste Verbindung zwischen dem Aufnahmeschacht und dem Laufwerk selbst gibt.

Vorzugsweise ist jede vorbereitete Position zur Aufnahme eines Moduls oder eines mechanischen Laufwerks gemäß einem Standardformfaktor ausgebildet. Durch die gleichartige Gestaltung aller Module sind diese dann kostengünstig herstellbar und leicht austauschbar - insbesondere zur Anpassung an neue Technologien oder Standards.

Das erfindungsgemäße Audio-/Videosignal-Verarbeitungsgerät umfasst eine Mehrzahl von Signalverarbeitungsmodulen. Vorzugsweise sind mehrere der folgenden Signalverarbeitungsmodule in das Gerät integriert: ein Fernsehmodul, ein Videodatenverarbeitungsmodul, ein CD/DVD-Modul, ein Audiodatenverarbeitungsmodul, ein Radiomodul, ein Fotodatenverarbeitungsmodul und ein Aufzeichnungsmodul. Durch die Kombination einer Mehrzahl von Modulen in einem einzigen Gerät ist eine Vielzahl bisher nicht bekannter Interaktionen zwischen den einzelnen Verarbeitungsoperationen möglich. Insbesondere ist die Aufzeichnung von Audio- und Videosignale, die aus allen Modulen herrühren können, in einfacher Weise möglich. Im Gegensatz zu herkömmlichen Geräten ist dabei eine flexible Auswahl der Signalquelle und des Aufzeichnungsmediums möglich. Dabei kann zusätzlich die in der Zentraleinheit vorgesehene Festplatte zur Zwischenspeicherung oder zur Archivierung der aufzuzeichnenden Daten verwendet werden.

Bei dem Fernsehmodul handelt es sich um ein analoges und/oder ein digitales Fernsehmodul. Das analoge Fernsehmodul ist zum Empfang von Fernsehsignalen nach zumindest einem der Standards NTSC, PAL und SECAM eingerichtet. Das Fernsehmodul ist insbesondere zur Aufbereitung von analogen oder digitalen Fernsehsignalen in MPEG-2 Videosignale zuständig. Durch die individuelle Verwendung verschiedener Fernsehmodule kann das Gerät in einfacher Weise die lokalen Gegebenheiten der Fernsehausstrahlung berücksichtigen. Insbesondere ist das Gerät so in einfacher Weise an den lokalen Umstellungsgrad von analogem zu digitalem Fernsehen anpaßbar.

Gemäß einer bevorzugten Ausführungsform weist das Audio/Videosignal-Verarbeitungsgerät ein Modul für hochauflösende Fernsehsignale (HDTV) auf.

Vorzugsweise können mit dem oder den Fernsehmodul(en) Fernsehsignale empfangen werden, die analog oder digital über Satellit, Kabel oder terrestrisch ausgestrahlt werden.

In entsprechender Weise ist das Radiomodul als analoges oder digitales Radiomodul ausgebildet. Je nach Verbreitung der internationalen DAB und DVB-Standards ist das Gerät entsprechend anpassbar.

Vorzugsweise weist das erfindungsgemäße Audio/Videosignal-Verarbeitungsgerät sowohl ein optisches Laufwerk zur Wiedergabe von auf CDs oder DVDs aufgezeichneten Daten als auch ein optisches Laufwerk zur Aufzeichnung dieser Daten auf. Dadurch lassen sich Daten von CDs und DVDs neu zusammenstellen und auf einem optischen Aufzeichnungsträger archivieren. Alternativ wird nur ein optisches Laufwerk verwendet, das sowohl zum Lesen als auch zum Schreiben von Daten eingesetzt wird. Kopiervorgänge können mit Hilfe der in das Gerät integrierten Archivierungsvorrichtung vorgenommen werden.

Neben einem optischen Speicherlaufwerk umfasst die Erfindung vorzugsweise auch ein magnetisches Speicherlaufwerk, beispielsweise ein weiteres Festplattenlaufwerk oder ein Minidisc-Laufwerk. Durch die Mehrzahl von Laufwerken ist die Flexibilität zur Wiedergabe und Aufzeichnung von Daten besonders groß.

Das Fotoverarbeitungsmodul ermöglicht vorzugsweise das Decodieren, Codieren, Bearbeiten und Archivieren von Bilddaten. Damit ist die Bearbeitung der eigenen Fotografien in einfacher Weise zu hause mit dem Audio/Videosignal-Verarbeitungsgerät über den eigenen Fernseher oder ein anderes Anzeigegerät möglich.

Bevorzugte Ausgestaltungen der Erfindung werden nachfolgend unter Bezugnahme auf die Figuren näher erläutert.
- Fig. 1: zeigt eine schematische Aufsicht auf das AudioNideosignal-Verarbeitungsgerät gemäß der vorliegenden Erfindung.
- Fig. 2: zeigt in Blockdiagrammform die Verschaltung der einzelnen Komponenten des erfindungsgemäßen AudioNideosignal-Verarbeitungsgeräts.
- Fig. 3: zeigt im Einzelnen den Aufbau der Mensch-Maschine-Schnittstelle des erfindungsgemäßen Audio/Videosignal-Verarbeitungsgeräts.
- Fig. 4: zeigt ein verallgemeinertes Beispiel einer Anzeige zur erfindungsgemäßen Benutzerführung.
- Fig. 5: zeigt ein Detail der erfindungsgemäßen Bedieneinheit der Mensch-Maschine-Schnittstelle.
- Fig. 6: bis Fig. 18 zeigen Beispiele der Anzeige für die erfindungsgemäße Benutzerführung.
- Fig. 19: zeigt einen schematischen Aufbau der erfindungsgemäßen Zuführung von Kühlluft zu dem Prozessor des Audio/Videosignal-Verarbeitungsgeräts.
- Fig. 20: zeigt eine Schnittansicht der erfindungsgemäß gedämpften Befestigung mechanischer Laufwerke in dem Audio/Videosignal-Verarbeitungsgerät.
- Fig. 21: zeigt eine perspektivische Ansicht des erfindungsgemäßen Dämpfungselementes und der zur Befestigung des Dämpfungselementes verwendeten Schraube.

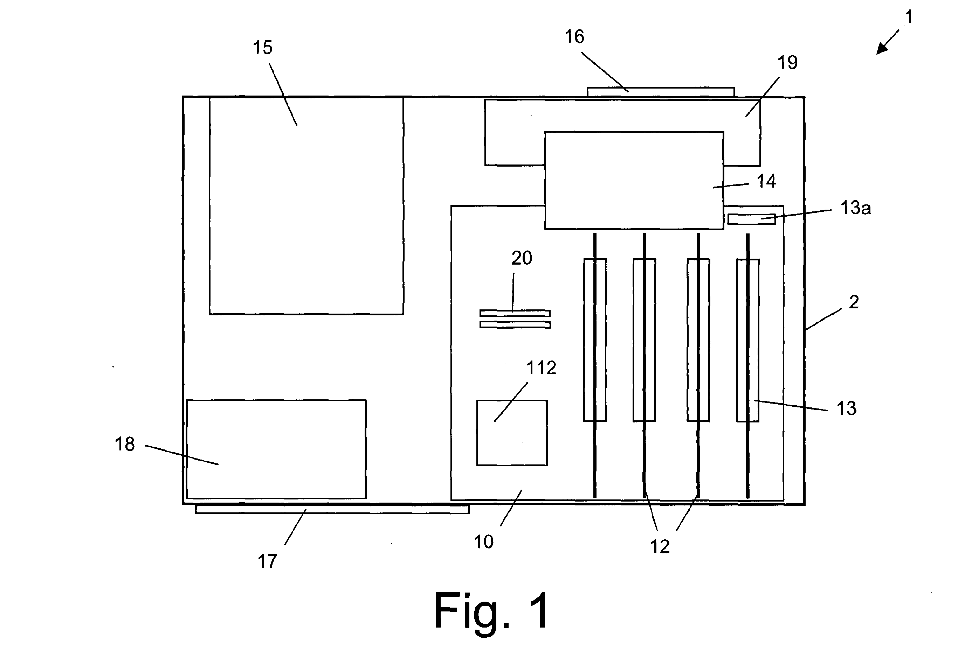

Eine Aufsicht auf das erfindungsgemäße Audio/Videosignal-Verarbeitungsgerät ist in Fig. 1 dargestellt. In dem Gehäuse 2 des Multifunktionsgerätes 1 ist eine Hauptplatine 10 mit einem Prozessor 112, diesem zugeordneten Speicherbausteinen 20 und einer Mehrzahl von Signalverarbeitungsmodulen 12 angeordnet. In den Steckplätzen 13 können die Signalverarbeitungsmodule 12 montiert werden.

Die Steckplätze 13 entsprechen vorzugsweise einem der aus Personal Computern bekannten Standards zum Anschluss von Steckkarten, vorzugsweise dem PCI-Standard. Die Abkürzung PCI steht für "Peripheral Component Interface". Dieser Standard wurde 1993 eingeführt und umfasst eine mechanische und eine übertragungstechnische Komponente. Alternativ können die Steckplätze 13 gemäß dem miniaturisierten PCI-Standard "MiniPCI" ausgebildet sein, wie er beispielsweise in Notebooks zum Anschluß von Wireless LAN-Karten verwendet wird.

Vorzugsweise sind alle Steckplätze 13 in gleicher Weise ausgebildet. Alternativ sind unterschiedliche Steckplätze vorgesehen, die verschiedenen Standards entsprechen, beispielsweise PCI-Steckplätze 13 und MiniPCl-Steckplätze 13a.

Sowohl der PCI- als auch der MiniPCl-Standard definieren jeweils eine Mehrzahl von Formfaktoren für eine mechanische Ausgestaltung der Einsteckplätze und der einzusteckende Karten. Auch für die elektrischen Anschlüsse sind jeweils unterschiedliche Varianten definiert. Für Einzelheiten beider Standards wird auf die jeweilige Standardspezifikation verwiesen.

Alle Module 12 werden mechanisch und elektrisch in den Stecksockeln des jeweiligen Steckplatzes gehalten. Die Anordnung der Module auf den einzelnen Steckplätzen ist aufgrund der identischen Ausgestaltung der Steckplätze beliebig. Über die Steckersockel werden alle eingesetzten Module über einen oder mehrere gemeinsame Busse, vorzugsweise den PCI-Bus, mit den übrigen Komponenten, insbesondere mit der I/O Kommunikationsschnittstelle 114 verbunden. Der PCI-Übertragungsstandard legt eine vorgegebene maximale Übertragungsdatenrate und Taktrate fest. Über den PCI-Bus können die angeschlossenen Module auch untereinander Daten austauschen.

Der PCI-Bus ist nur als bevorzugte Ausführungsform eines gemeinsamen Steckkarten- und Bussystems beschrieben. Die Module können sowohl über andere standardisierte Steckplätze als auch über einen proprietären Standard in dem Gehäuse 2 befestigt und kontaktiert werden.

Zur Wiedergabe, Zwischenspeicherung und/oder Aufzeichnung von Daten ist in dem Gehäuse 2 mindestens ein Speicherlaufwerk 15 angeordnet. Als Speicherlaufwerke kommen sowohl optische als auch magnetische Laufwerke in Betracht. Vorzugsweise dient ein optisches Speicherlaufwerk dem Lesen von CDs und DVDs, um die gelesenen Daten anschließend von dem Prozessor 112 und über ein entsprechendes Audiosignalverarbeitungsmodul oder Videosignalverarbeitungsmodul weiterzuverarbeiten.

Das beschriebene oder ein weiteres Laufwerk dient der Aufzeichnung von Daten auf optischen Speichermedien, dem sog. "Brennen". Durch die separate Bereitstellung von optischen Speicherlaufwerken für die Wiedergabe von Daten und für die Aufzeichnung von Daten kann jedes Laufwerk jeweils optimal für seine Anwendung ausgelegt werden und eine flexible Verschaltung von Signalquellen und Aufzeichnungsmedien ist sichergestellt.

Zusätzlich kann ein magnetisches Speicherlaufwerk in dem Gehäuse 2 angeordnet sein. Das magnetische Laufwerk kann ein Festplattenlaufwerk oder ein Minidisc-Laufwerk sein. Während das Festplattenlaufwerk nur als Ergänzung für eine zentral in dem Multifunktionsgerät angeordnete Festplatte, die als Archivierungseinrichtung vorgesehen ist, dient, ermöglicht die Minidisc die Zuführung von Audiodaten über ein weiteres standardisiertes Medium.

Der Prozessor 112 führt in Abhängigkeit von der Benutzersteuerung eine Signalverarbeitungsoperation aus und steuert dementsprechend das jeweilige Modul 12 und gegebenenfalls das erforderliche optische Laufwerk 15 an. Die von einem Laufwerk gelesenen Daten werden von dem Prozessor 112 und dem jeweils ausgewählten Modul 12 verarbeitet und entweder über einen externen Anschluss 16, 17 ausgegeben oder intern auf einer Archivierungseinrichtung 14 oder einem Speichermedium in einem der optischen Laufwerke 15 aufgezeichnet. Die Archivierungseinrichtung 14 weist eine standardisierte Größe auf, so dass sie flexibel durch eine andere Festplatte ersetzbar ist. Auf diese Weise kann eine Anpassung des Gerätes an einen mehr oder weniger großen Speicherplatzbedarf vorgenommen werden, um eine Konfiguration beispielsweise zur Archivierung größerer Video-, Audio- und/oder Fotodatenvolumen zu realisieren.

Vorzugsweise ist der Prozessor 112 über einen Sockel auf der Hauptplatine 10 montiert. Durch die gesockelte Ausführung kann der Prozessor flexibel an die jeweilige Konfiguration des Multifunktionsgerätes angepasst werden, ohne dass die Hauptplatine 10 des Gerätes zu verändern ist. Bei besonders rechenaufwändigen Funktionalitäten, die in das Multifunktionsgerät integriert sind, kann der Prozessor in einfacher Weise durch einen leistungsfähigeren Prozessor ersetzt werden. In entsprechender Weise sind ebenfalls die an den Speicherplätzen 20 eingesetzten Speicherbausteine in einfacher Weise an die für die Rechenoperationen des Prozessors 112 erforderliche Rechenleistung anpassbar, so dass das Multifunktionsgerät flexibel konfigurierbar ist.

Die externen Anschlüsse 16 und 17 ermöglichen die Ausgabe und auch die Zuführung von externen Signalen. Vorzugsweise werden die Signalanschlüsse 17, die für eine dauerhafte Verbindung mit einem externen Gerät vorgesehen sind, auf der Gehäuserückseite angeordnet, während sich die Anschlüsse 16 zum temporären Anschließen eines Gerätes auf der Vorderseite des Gehäuses 2 befinden.

Als Schnittstelle für Speicherkarten ist außerdem ein Frontconnector-Modul 19 mit einem Kartenlesegerät vorgesehen, das eine Mehrzahl von Einschubplätzen für Speicherkarten unterschiedlicher Standards bereitstellt.

Zur Spannungsversorgung ist in dem Gehäuse 2 ein zentrales Netzteil 18 angeordnet, das alle Komponenten des Multifunktionsgerätes mit Strom versorgt. Das Netzteil 18 ist vorzugsweise ein standardisiertes Netzteil, das je nach Konfiguration der Funktionalitäten des Netzteils 18 in einfacher Weise optimierbar ist.

Das Netzteil 18 ist mit einem Lüfter versehen, der das Netzteil mit Kühlluft anströmt. In einer besonderen Ausgestaltung ist der Netzteillüfter als Lüfter mit elektronisch geregelter Drehzahl ausgeführt. Die Drehzahl wird dabei vorzugsweise in Abhängigkeit von der Temperatur des thermisch kritischen Halbleiters des Netzteils 18 geregelt.

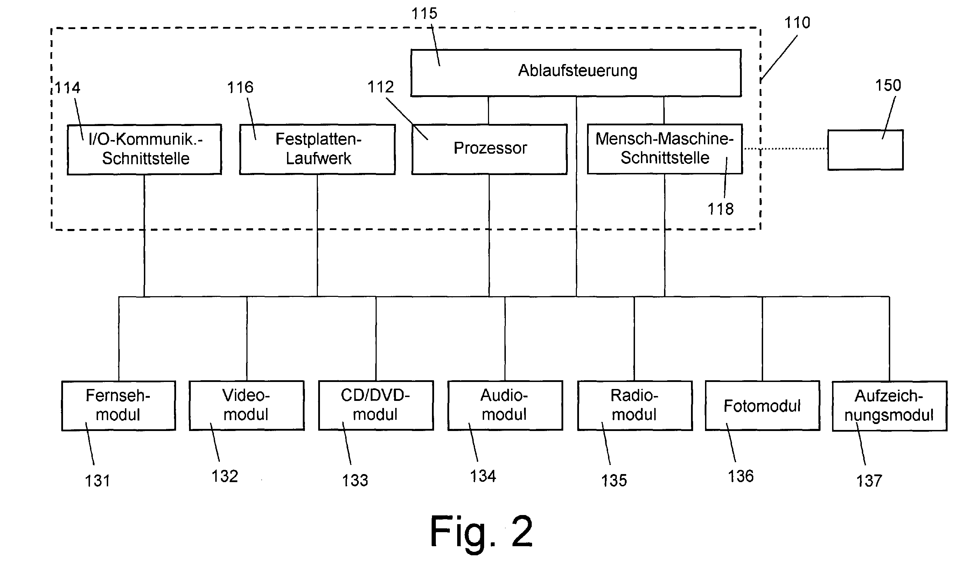

Der funktionelle Aufbau des erfindungsgemäßen Audio/Videosignal-Verarbeitungsgerätes 1 ist in Fig. 2 schematisch in Form eines Blockdiagramms dargestellt. Der Prozessor 112 bildet mit einer Archivierungseinrichtung 116, einer Mensch-Maschine-Schnittstelle 118, einer Ablaufsteuerung 115 und einer I/O-Kommunikationsschnittstelle 114 die Zentraleinheit 110 des Gerätes 1, die über den Bus 130 mit den Signalverarbeitungsmodulen bzw. den Laufwerken 131-137 verbunden ist. Der Bus 130 ist vorzugsweise ein PCI-Bus, wobei die Laufwerke über einen IDE-Bus angeschlossen sind, der von der I/O-Kommunikationsschnittstelle bereitgestellt wird. Die angeschlossenen Module umfassen vorzugsweise ein Fernsehmodul 131, ein Videosignalverarbeitungsmodul 132, ein optisches Speicherlaufwerk 133, ein Audiosignalverarbeitungsmodul 134, ein Radiomodul 135, ein Fotomodul 136 und ein Datenaufzeichnungsmodul 137.

Obwohl die Module vorzugsweise mittels einer speziellen Hardware in das Multifunktionsgerät integriert werden, kann eine Mehrzahl von Funktionalitäten auch über eine spezielle Anwendungssoftware in dem Multifunktionsgerät realisiert werden. Ein Großteil der Konsumerelektronik-Funktionalitäten ist alternativ über Soft- oder Hardware oder eine Kombination von Soft- und Hardware realisierbar. Die Anwendungsprogramme für diese Funktionalitäten werden vorzugsweise auf dem Speichermedium der Zentraleinheit 110, d.h. dem Festplattenlaufwerk 116 gespeichert. Beispiele für Module, die als reine Softwaremodule ausgebildet werden können, sind ein Aufzeichnungsmodul zur Steuerung der Archivierung, d.h. Aufzeichnung und Verwaltung von Audio-, Video- und Fotodateien, ein Scheduler-Modul zur programmierten Abarbeitung von Aufzeichnungsvorgängen und zur Koordination von dabei auftreten Konflikten (beispielsweise bei einer geplanten gleichzeitigen Durchführung mehrerer Aufzeichnungsvorgänge), ein Timeshift-Modul für ein Zurückspringen und Aussetzen der Wiedergabe eines aktuell ausgestrahlten Video- oder Audiosignals (beispielsweise aufgrund einer privaten Telefon-Unterbrechung während des Fernseh- oder Radiosendung, so dass eine Wiedergabe der ausgestrahlte Sendung kurz vor der Unterbrechung wieder aufgenommen und mit Zeitversatz fortgesetzt werden kann), ein Audiomodul zur Verwaltung, Verarbeitung und Wiedergabe von Audiodaten aller Art, eine Videomodul zur Verwaltung, Verarbeitung und Wiedergabe von Videodaten aller Art und ein Fotomodul zur Verwaltung, Verarbeitung und Wiedergabe von Standbildern aller Art.

Die Zentraleinheit 110 umfasst den Prozessor 112, die I/O-Kommunikationsschnittstelle 114, die Archivierungseinrichtung 116, die Ablaufsteuerung 115 und die Mensch-Maschine-Schnittstelle 118. Die Mensch-Maschine-Schnittstelle steht in Verbindung mit einer externen Bedieneinheit 150. Über die Bedieneinheit 150 kann der Benutzer Steuerungsbefehle dem Audio/Videosignal-Verarbeitungsgerät zuführen. Auf Details der Benutzerführung wird nachfolgend im Zusammenhang mit einer detaillierten Beschreibung der Mensch-Maschine-Schnittstelle 118 eingegangen.

Die Ablaufsteuerung 115 ist sowohl mit dem Bussystem als auch mit dem Prozessor und der Mensch-Maschine-Schnittstelle verbunden. Sie koordiniert die Kommunikation und Interaktion zwischen allen Modulen und Komponenten des Multifunktionsgerätes. Die Ablaufsteuerung kann beispielsweise mittels eines Betriebssystems realisiert werden, das den Modulen und Komponenten des Gerätes nach dem Laden des BIOS vordefinierte Funktionen bereithält, auf die die Module und Komponenten zur Durchführung ihrer Audio/Videofunktionalitäten zugreifen können. Die für die Durchführung der Ablaufsteuerung erforderlichen Rechenoperationen werden vorzugsweise von dem Prozessor 112 ausgeführt.

Das Fernsehmodul 131 kann vorzugsweise sowohl analog als auch digital ausgestrahlte Fernsehsignal empfangen und verarbeiten. Dabei werden jeweils alle gängigen Standards unterstützt, nämlich NTSC, PAL und SECAM für analoges Fernsehen und die DVB Standards für digitales Fernsehen.

Das digitale Fernsehsignal entspricht vorzugsweise der DVB-Spezifikation. Über entsprechende Anschlüsse der I/O-Kommunikationsschnittstelle 118 ist das Multifunktionsgerät nicht nur zum Empfang digitaler Fernsehsignale über einen Kabel- oder Antennenanschluß in der Lage, sondern auch zum Empfang von über Satellit ausgestrahlte Signale (im DVB-S-Format). Mit einer Internetanbindung kann das Multifunktionsgerät weiterhin auf digitale Inhalte zugriffen, die über das Internet angefordert und über Satellit ausgestrahlt werden. Dadurch können die über das Internet angebotenen Audio- und Videoinhalte kommerzieller und auch nicht kommerzieller Anbieter geladen und verarbeitet werden.

Gemäß einer weiter bevorzugen Ausführungsform ist in dem Fernsehmodul oder separat dazu ein Pay-TV-Modul vorgesehen. Das Pay-TV-Modul ermöglicht den Empfang verschlüsselt ausgestrahlter Fernsehsendungen. Dabei kontrolliert eine Conditional Access (CA) genannte Technologie den Zugriff auf digitale Fernsehdienste, so dass diese nur von autorisierten Benutzern entschlüsselt werden können. Zu diesem Zweck muß eine entsprechende Hardware in dem jeweiligen Endgerät installiert sein, die an das vom Sender verwendete Verschlüsselungsverfahren angepasst ist. Über eine vom Benutzer zu erwerbende Smart Card wird das System in die Lage versetzt, die übertragenen Daten zu entschlüsseln. Ein solches CA-System kann auch zum Empfang von Audiodaten verwendet werden.

Eine Realisierung eines solches Fernsehmoduls ist beispielsweise mit einem Phillips-PCI-Audio- und Videodecoders mit der Produktbezeichnung SAA7134HL möglich. Dieser Audio- und Videodecoder ist ein hochintegrierter Ein-Chip-Decoder zum Empfang von analogen und digitalen Fernsehsignalen. Mit diesen Bausteinen können daher verschiedene Fernsehfunktionen in einem Modul realisiert werden, wobei die einzelnen Funktionalitäten über die Zentraleinheit jeweils separat ansprechbar sind. Alternativ können auch andere Bausteine verwendet werden, die das analoge und digitale Fernsehen beispielsweise separat realisieren.

Der VIA VT1622 bereitet Videoausgabedaten für die Anzeige auf CE (Consumer Elektronik) Display-Geräten auf, d.h. für handelsübliche Fernsehgeräte mit SCART, Composite oder S-Video Eingang. Er stellt Signale gemäß FBAS, S-Video und SCART RGB Spezifikation zur Verfügung.

Das Videomodul 132 ermöglicht die Archivierung, Verwaltung, Bearbeitung und Wiedergabe von Videosequenzen. Videosequenzen, die beispielsweise mit Hilfe einer Heimvideokamera aufgenommen wurden, können über die entsprechenden Eingänge der I/O-Kommunikationsschnittstelle auf der Festplatte des AudioNideosignal-Verarbeitungsgeräts gespeichert werden. Alternativ können die Videosequenzen auch über Speichermedien wie CDs, DVDs, Speicherkarten oder Magnetbänder dem Gerät zur weiteren Verarbeitung zugeführt werden.

Gemäß einer bevorzugten Ausgestaltung ist das Multifunktionsgerät über die I/O-Kommunikationsschnittstelle 118 über ein Netzwerk mit externen Geräten verbindbar. Dazu wird das Multifunktionsgerät drahtgebunden oder drahtlos mit anderen Geräten vernetzt. Eine solche Verbindung ist beispielsweise über ein LAN- oder WLAN-Netzwerk realisierbar. Im Gegensatz zu herkömmlichen Konsumerelektronikgeräten ist das Multifunktionsgerät der Erfindung damit in der Lage, nicht nur lokal in dem Multifunktionsgerät gespeicherte Daten und Inhalte abzuspielen, sondern auch solche, die auf anderen, mit dem Multifunktionsgerät vernetzten Geräten gespeichert sind. Weiterhin kann das Gerät die auf ihm gespeicherten Daten anderen mit ihm vernetzten Geräten zur Wiedergabe zur Verfügung stellen.

Außerdem kann das Multifunktionsgerät über einen Modemanschluß auch auf Inhalte zugreifen, die nur über das Internet erreichbar sind. Damit können Audio-/Video-/Fotodaten, die an einem entfernten Ort gespeichert sind, geladen, verarbeitet, wiedergegeben oder auch in die interne Archivierungseinrichtung aufgenommen werden. Beispielsweise können so von kommerziellen Anbietern verwaltete Fotoarchive in das eigene Archiv aufgenommen werden oder das andere Archiv mit verwaltet werden. Der Internetzugang kann unter anderem als ISDN- oder ADSL-Zugang ausgebildet sein.

Alle zugeführten Videosequenzen werden vorzugsweise in der Archivierungseinrichtung 116 der Zentraleinheit 110 gespeichert und verwaltet. Dadurch kann der Benutzer seinen Videodatenbestand zentral verwalten und jederzeit die gewünschte Videosequenz auffinden. Die Videosequenzen können dabei wie auf einem Computer in unterschiedlichen Ordnern gruppiert und mit entsprechenden Namen versehen werden. Die Sequenzen können wiedergegeben, editiert und auf einem anderen Medium, beispielsweise einem optischen Speichermedium, aufgezeichnet werden. Aus den vorhandenen Videosequenzen lassen sich außerdem neue Videosequenzen zusammenschneiden.

Die Module des Multifunktionsgerätes können in vielfältiger Weise miteinander zusammenarbeiten. Ein weiteres Beispiel für eine solche "interaktive" Funktionalität ist der Empfang von Fernsehsignalen von dem Fernsehmodul und die Weiterverarbeitung des empfangenen digitalen Fernsehsignals in dem Videomodul, beispielsweise zur Archivierung.

In entsprechender Weise verwaltet und bearbeitet das Audiomodul Audiodateien. Die Audiodateien werden entweder auf der Archivierungseinrichtung des Gerätes oder optischen Speichermedien wie CDs oder DVDs gespeichert. Alternativ können Audiodateien auch auf Speicherkarten gespeichert oder über die I/O Schnittstellen, vorzugsweise der USB-Schnittstelle zugeführt/ausgegeben werden. Ist das Multifunktionsgerät mit einem anderen Gerät vernetzt, beispielsweise über das LAN oder WLAN, so kann auch auf Speichermedien in externen Geräten zugriffen werden. Mit einem Internetanschluß kann auf Inhalte auch über das Internet zugegriffen werden.

Das Audiomodul kann den Audiodatenbestand des Benutzers auf der internen Festplatte als Archivierungseinrichtung des Multifunktionsgerätes verwalten Dadurch ist jede Audiodatei schnell wiederauffindbar. Die Audiodateien lassen sich zwischen allen Speichermedien - soweit in Abhängigkeit von vorhandenen Kopierschutzmechanismen zulässig - kopieren, so dass gewünschte Titel, beispielsweise zu einer neuen CD oder einer Speicherkarte für ein tragbares Wiedergabegerät zusammenstellbar sind.

Die Codierung von digitalen Audio- und Videodaten kann beispielsweise mit Hilfe des Phillips-Schaltkreises SAA6752HS realisiert werden. Dieser Halbleiterschaltkreis ermöglicht eine Audio- und Videocodierung gemäß den Codierungsstandards MPEG-2 Video und MPEG-Audio/AC3-Audio.

Dieser Baustein vereinigt Rechenoperationen des Audio- und des Videomoduls in einem Baustein. Die unterschiedlichen Funktionen werden je nach gewünschter Anwendung von der Zentraleinheit 110 jeweils separat aktiviert. Für den Fachmann ist es selbstverständlich, dass eine beliebige Anzahl von Funktionen in einem Modul 12 kombinierbar ist, wobei die einzelnen Anwendungsoperationen jeweils individuell von der Zentraleinheit je nach der von dem Benutzer gewünschten Konsumerelektronikgerät-Funktionalität abrufbar sind.

Ein spezieller digitaler Audiocodier-Decodierchip ist der Schaltkreis CMI 9761 der C Media Electronics, Inc. Dieser Chip realisiert einen sechskanaligen Audiocodierer und -decodierer, mit dem sich ein Audiomodul realisieren lässt.

Das Radiomodul 135 ermöglicht den analogen und digitalen Radioempfang über terrestrisch, per Satellit oder Kabel ausgestrahlte Rundfunksignale. Vorzugsweise gibt das Radiomodul nur über FM übertragenen Radiosendungen wieder. Ergänzend können jedoch auch über AM ausgestrahlte Radiosendungen wiedergegeben werden. Das Modul kann separat oder zusammen mit dem Fernsehmodul realisiert werden.

Auch bei separater Realisierung von Radiomodul und Fernsehmodul kann die Zentraleinheit auf Radioprogrammvorhersagen zurückzugreifen, die über Teletext oder Videotext ausgestrahlt werden. Das Radiomodul selbst kann nicht auf die Inhalte von Video- oder Teletext zugreifen, da diese Information nur über das Fernsehmodul erhältlich ist. Diese Funktionalität wird deshalb dem Benutzer über eine Interaktion zwischen verschiedenen Modulen angeboten, und zwar ist beispielsweise eine Programmvorschau für den Benutzer in die Radiomenüoberfläche integriert und aus dieser abrufbar.

Zusätzlich kann über spezielle Servicekanäle im Rundfunkbereich übertragene Information erfasst und dem Benutzer zur Verfügung gestellt werden. Zu diesem Zweck ist in das Radiomodul oder in das kombinierte Radio-Fernsehmodul ein RDS Baustein integriert, der optional eingesetzt werden kann. Dieser Baustein dekodiert die mit dem Radiosignal ausgestrahlte RDS-Information so dass sie dem Anwender angezeigt werden können. Alternativ ist das RDS-Modul separat von einem Radiound/oder einem Fernsehmodul vorgesehen, um RDS-Information zu extrahieren und wiederzugeben.

Das Radiomodul 135 ist unabhängig von einem Fernsehmodul beispielsweise mit dem Phillips-Radiomodul FM1216ME der MK3-Familie realisierbar. Der Phillips FM1216ME der MK3-Familie ist ein TV-FM Tuner. Er wird sowohl für TV als auch für FM Radio benötigt.

Ähnlich zu dem Videomodul 132, das die Verwaltung und Bearbeitung von Videosequenzen ermöglicht, und dem Audiomodul 134 stellt das Fotomodul 136 eine Vielzahl von Operationen für die Verwaltung, Bearbeitung und Archivierung von Standbildern bereit. Vorzugsweise können damit von dem Benutzer einer Digitalkamera aufgenommenen Fotos verwaltet werden. Der Benutzer führt die aufgenommenen Fotos über eine entsprechende Schnittstelle, z.B. eine USB-Schnittstelle der I/O-Kommunikationsschnittstelle oder über Speicherkarten dem AudioNideosignal-Verarbeitungsgerät zu. Die Fotos lassen sich in einzelnen Ordnern wiederum wie bei einem Computer in einfacher Weise ablegen, mit Zusatztext versehen oder bearbeiten. Zum Herstellen von Papierbildern lassen sich gegebenenfalls die entsprechenden Informationen direkt dem Foto als Verarbeitungsdatei zuordnen und auf einem Speichermedium, beispielsweise einer Speicherkarte, zur Weitergabe an ein Labor aufzeichnen. Weiterhin verfügt das Gerät über die Möglichkeit, Fotos auf einem geeigneten Drucker auszudrucken, der über die Schnittstellen, beispielsweise die USB Schnittstelle, direkt mit dem Multifunktionsgerät verbunden ist.

Außerdem lassen sich mit dem Fotomodul 136 Fotos zu Sequenzen zusammenstellen, die auf einem anschließbaren Monitor oder Fernsehgerät einzeln oder in automatischer Weise als "Diashow" wiedergegeben werden können.

Sowohl das Fotomodul als auch das Video- und Audiomodul sind zur Verarbeitung von Video- und Audiosignalen in allen herkömmlichen Formaten eingerichtet.

Ein separates Modul 133 enthält ein optisches Speichermedium, insbesondere ein CD- und DVD-Laufwerk. Das Modul 133 übernimmt zusammen mit anderen Modulen alle Aufgaben, die herkömmlich von einem separaten CD- oder DVD-Wiedergabegerät bereitgestellt werden.

In einem weiteren Modul 137 können Audio- und Videodaten auf einem optischen Speichermedium, wie einer CD- oder einer DVD-Rewritable, aufgezeichnet werden. Allgemein wird diese Funktionalität als "CD/DVD-Brenner" bezeichnet.

Die in dem Multifunktionsgerät verwendeten optischen Laufwerke entsprechen einer standardisierten Einbaugröße mit standardisierten Anschlüssen, so dass sie in beliebiger Weise zur optimalen Anpassung an die Gerätefunktionalität austauschbar sind.

Die Zentraleinheit 110 enthält den Prozessor 112, die I/O-Kommunikationsschnittstelle 114, die Archivierungseinrichtung 116, die Ablaufsteuerung 115 und die Mensch-Maschine-Schnittstelle 118. Der Prozessor 112 ist die zentrale Recheneinheit des Audio/Videosignal-Verarbeitungsgeräts. Der Prozessor erledigt alle anfallenden Rechenoperationen, auch die ihm von den einzelnen Modulen 131-137 über den Bus 130 zugeführten Rechenaufgaben. Beispielsweise übernimmt der Prozessor Codier- und Decodieraufgaben für Audio- und Videosignale, soweit diese Rechenoperationen nicht von den Modulen selbst erledigt werden.

Gemäß einer bevorzugten Ausführungsform werden von dem Prozessor 112 alle in dem Multifunktionsgerät anfallenden Audio/Video-Rechenoperationen durchgeführt. Der Prozessor 112 ist damit die einzige, zentrale Recheneinheit für alle Audio- und Videorechenoperationen. Vorzugsweise sind der Prozessor und die Ablaufsteuerung so ausgestaltet, dass eine Mehrzahl von verschiedenen Funktionen gleichzeitig bearbeitet werden kann. Beispielsweise kann während der Wiedergabe einer Fernsehoder Radiosendung eine Aufzeichnung oder eine Archivierung dieser Sendung oder eines anderen Audio- oder Videosignals durchgeführt werden.

Der Prozessor 112 kann mit jedem leistungsfähigen Prozessor eines herkömmlichen Personal Computers realisiert werden. Beispielsweise lässt sich zu diesem Zweck der Intel Celeron Prozessor verwenden.

Anschlüsse für die Zuführung und Ausgabe von Daten werden von der I/O-Kommunikationsschnittstelle 114 bereitgestellt, d.h. die I/O-Kommunikationsschnittstelle umfaßt alle Schnittstellen des Multifunktionsgerätes nach außen. Radio- und Fernsehsignale können über entsprechende Antennenanschlüsse zugeführt werden, Audiound Videosignale anderer Konsumelektronikgeräte über die entsprechenden standardisierten Anschlüsse, beispielsweise SCART-Anschlüsse für ein Fernsehgerät, FBAS oder S-Video für einen Videorecorder oder Analog Audio In/Out für analoge Audiogeräte. Zusätzlich unterstützt die I/O-Kommunikationsschnittstelle 114 alle gängigen Speicherkartenstandards wie beispielsweise den "Memory Stick", die "MultiMediaCard", die "SD-Card", die "CompactFlash-Karte" , die "SmartMedia Karte" und den USB-Stick. Speicherkarten sind auswechselbare, wiederbeschreibbare, nichtflüchtige Speichermedien. Die Speicherung erfolgt in karteninternen Flash-Speicherbausteinen.

Memory Sticks werden momentan hauptsächlich in Sony-Geräten verwendet, dort allerdings in einer ganzen Reihe verschiedener Geräte. MultiMediaCards werden in einer Vielzahl von MP3-Playern und Handys verwendet. SD-Cards kommen heutzutage vorzugsweise in Organizern, MP3-Playern und Handys zum Einsatz, während CompactFlash-Karten in einer Vielzahl von Kameras verwendet werden. Der USB-Stick wird in einen freien USB-Anschluß der I/O-Kommunikationsschnittstelle gesteckt und steht sofort als zusätzliches Laufwerk für die Aufzeichnung oder das Lesen von Daten zur Verfügung.

Über standardisierte Bus-Anschlüsse, beispielsweise für den IEEE1394 (Firewire) oder USB-Bus, können in einfacher Weise Videosignale direkt von einer Videokamera aufgezeichnet oder überspielt werden. Der USB (Universal Serial Bus) ist ein Standard für die Verbindung externer Geräte über einen genormten Stecker mit hoher Übertragungsdatenrate. Zusätzlich oder alternativ kann auch eine Schnittstelle gemäß dem universellen Standard RS232 vorgesehen sein.

Um das Multifunktionsgerät auch mit externen Geräten vernetzen zu können, ist vorzugsweise ein Netzwerkanschluß für verdrahtete LAN Netzwerke, wie Ethernet 10/100/1000 oder drahtlose WLAN Netzwerke, wie 802.11 b/g vorgesehen. Über einen Modem, einen ISDN oder ADSL- Anschluß ist das Multifunktionsgerät außerdem mit dem Internet verbindbar.

Die Ausgabe der verarbeiteten Signale erfolgt über entsprechende Video- und Audioanschlüsse. Vorzugsweise ist zumindest ein Fernsehgerät oder Videomonitor zur Ausgabe von Videosignalen anschließbar. Die Videoausgabe erfolgt dazu als Fernsehsignal (FBAS, SCART RGB oder S-Video-Signal) oder für Computermonitore als VGA-Signal. Entsprechende Signalumwandlungsschaltkreise sind vorzugsweise in der Schnittstellenvorrichtung 118 angeordnet.

Die Audiosignale sind ebenfalls über ein angeschlossenes Fernsehgerät wiedergegebbar. Zusätzlich können die Audiosignale einer separaten Hifi-Anlage zur Wiedergabe über deren Lautsprecher zugeführt werden. Außerdem sind Audiosignale direkt an Lautsprecher ausgebbar, wenn es sich bei den Lautsprechern entweder um sogenannte "Aktivboxen" handelt oder an passive Lautsprecher, wenn ein entsprechender Verstärker als separates Modul oder als Bestandteil eines der anderen Module in dem Multifunktionsgerät vorgesehen ist.

In einer besonderen Ausführungsform umfasst das Audio/Videosignal-Verarbeitungsgerät einen Kopfhöreranschluss oder/und ein Modul zum Betreiben eines drahtlosen Kopfhörers, so dass keine direkte Leitungsverbindung zwischen dem Gerät und dem Kopfhörer erforderlich ist. Mit Hilfe eines solchen Moduls für einen drahtlosen Kopfhöreranschluss, entweder auf Infrarot- oder auf Funkbasis, kann das herkömmlicherweise separate Sendemodul in das Multifunktionsgerät der vorliegenden Erfindung integriert werden.

Die I/O-Kommunikationsschnittstelle ist vorzugsweise modular aufgebaut, so dass die bereitgestellten Eingangs- und Ausgangsanschlüsse je nach Bedarf konfigurierbar sind. Einige der Komponenten der I/O-Kommunikationsschnittstelle sind dabei fest auf der Hauptplatine aufgelötet. Videoausgabe, Audioeingabe und -ausgabe sind Komponenten, die in jeder Variante benötigt werden und immer zur "Grundausstattung" gehören. Diese Komponenten können - falls erforderlich - abgeschaltet werden und/oder durch neue Komponenten ergänzt werden. Das Multifunktionsgerät kann so ausgestaltet sein, dass neue Komponenten ebenfalls in die Modulsteckplätze einsetzbar und darüber in die I/O-Kommunikationsschnittstelle integrierbar sind.

Die Erfindung ist nicht auf die bisher angesprochenen Module und deren spezifische Zusammenstellung beschränkt. Jede beliebige Zusammenstellung von Modulen und auch eine Vielzahl bisher nicht explizit angesprochener Module ist über die in dem Gehäuse vorbereiteten Steckplätze in das Multifunktionsgerät integrierbar.

Die Mensch-Maschine-Schnittstelle 118 ermöglicht die interaktive Steuerung des erfindungsgemäßen Multifunktionsgeräts durch den Benutzer. Zu diesem Zweck ist die Mensch-Maschine-Schnittstelle 118 mit einer Bedieneinheit 150 verbunden, über Mensch-Maschine-Schnittstelle 118 mit einer Bedieneinheit 150 verbunden, über die der Benutzer seine Steuerungskommandos eingeben kann. Die Bedieneinheit 150 kann fest mit dem Gerät verbunden sein, ist jedoch vorzugsweise als drahtlose Fernbedienung ausgebildet.

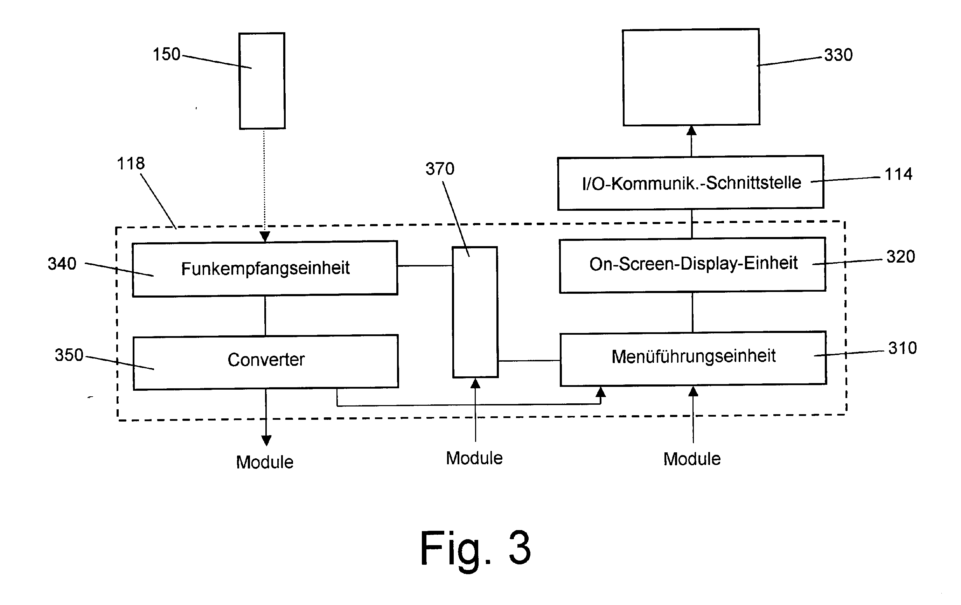

Der Aufbau der Mensch-Maschine-Schnittstelle ist im Einzelnen in Fig. 3 wiedergegeben. Die Mensch-Maschine-Schnittstelle 118 enthält eine Menüführungseinheit 310, eine On-Screen-Display-Einheit 320, eine Funkempfangseinheit 340, einen Converter 350 und ein Statusregister 370.

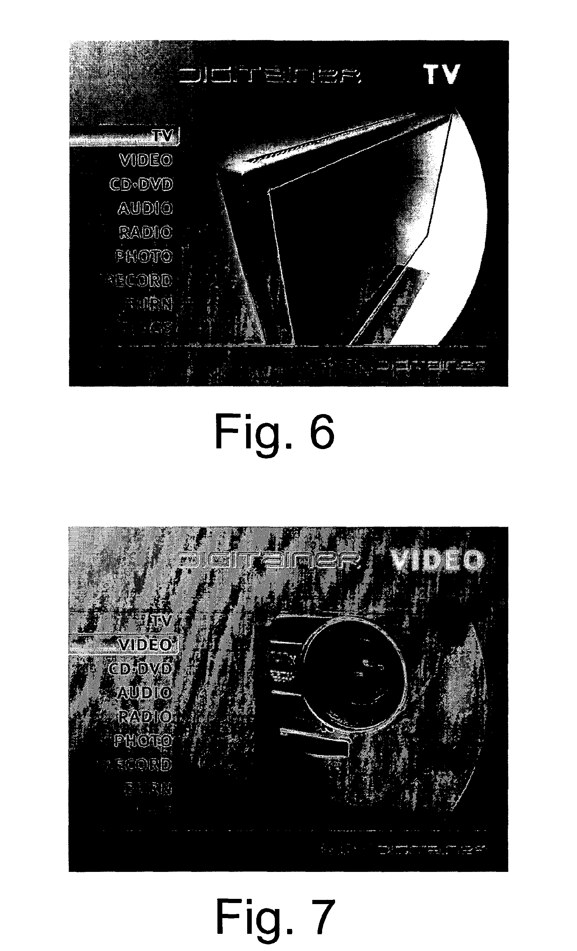

Die Menüführungseinheit 310 erzeugt die anzuzeigenden Dateninhalte, um dem Benutzer interaktiv die aktuell gültigen Steuerungs-Wahlmöglichkeiten anzuzeigen. Die dem Benutzer jeweils angebotenen Auswahlmöglichkeiten hängen von der jeweiligen Konfiguration des Multifunktionsgerätes, dem aktuellen Betriebszustand und vorausgehenden Auswahlbefehlen des Benutzers ab. Die Menüführung wird nachfolgend in Zusammenhang mit den Fig. 6 bis 18 im Einzelnen erläutert.

Die von der Menüführungseinheit 310 ausgewählten Inhalte werden einer On-Screen-Display-Einheit 320 zugeführt, die aus den anzuzeigenden Inhalten ein Videosignal erzeugt. Das von der On-Screen-Display-Einheit 320 erzeugte Anzeigesignal wird den entsprechenden Anschlüssen (bzw. der entsprechenden Videoausgabekomponente) der I/O-Kommunikationsschnittstelle 114 zur Ausgabe an ein Fernsehgerät oder an einen Videomonitor zugeführt. Eine mit dem Multifunktionsgerät verbundene Anzeigeeinheit 330, insbesondere ein Fernsehgerät oder ein Monitor, zeigen dem Benutzer die ihm in der aktuellen Navigationsebene zur Verfügung stehenden Auswahloptionen an.

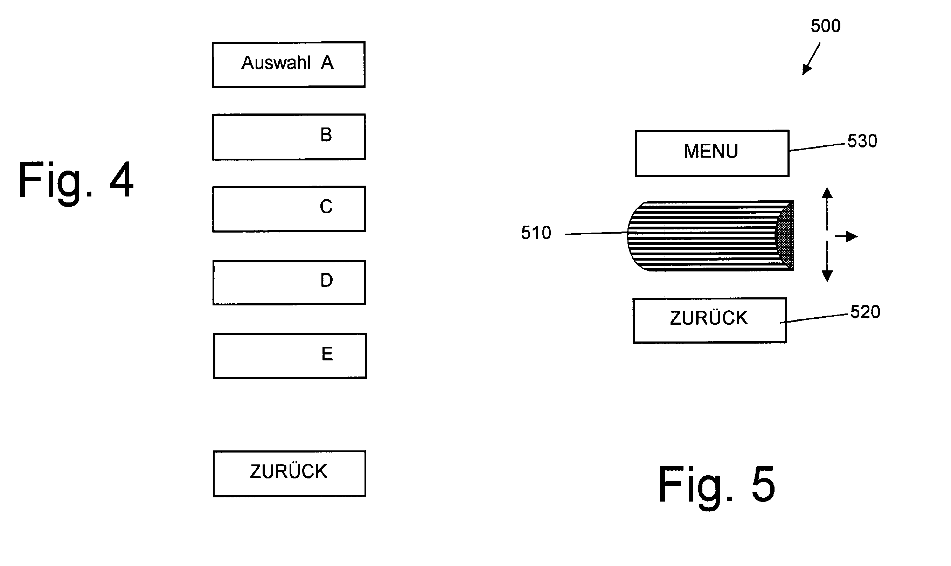

Während ein Benutzer sich herkömmlich an eine Fernbedienung mit einer Vielzahl von Tasten zu gewöhnen hat oder sogar eine Tastatur mit einer zusätzlichen Zeigersteuerung bedienen muß, kommt die erfindungsgemäße Menüführung ohne eine langwierige Eingewöhnungsphase aus. Das Grundprinzip der erfindungsgemäßen Benutzerführung wird nachfolgend unter Bezugnahme auf die Figuren 4 und 5 dargestellt. Detaillierte Bespiele werden anschließend anhand der Figuren 6 bis 18 beschrieben.

Eine schematische Darstellung eines von der On-Screen-Display-Einheit 320 erzeugten Auswahlbildes ist in Fig. 4 wiedergegeben. Über die Auswahlmenüpunkte A bis E kann der Benutzer einen bestimmten Befehl zur Steuerung des Multifunktionsgerätes auswählen. In Abhängigkeit von dem Befehl wird dem Benutzer entweder eine entsprechende weitere Auswahlliste angezeigt oder eine ausgewählte Funktion ausgeführt. Über die mit "Zurück" bezeichnete Taste kann der Benutzer zur nächsthöheren Navigationsebene zurückkehren.

Die Benutzerführung mit Hilfe von Auswahllisten ermöglicht eine intuitive Navigation zu dem gewünschten Steuerungsbefehl, ohne dass aufwendiger Erklärungsbedarf zur Bedienung des Geräts erforderlich ist. Während herkömmliche Geräte eine unübersehbare Vielfalt von Tasten bereitstellen, werden dem Benutzer für alle von dem Multifunktionsgerät zu simulierenden herkömmlichen Konsumerelektronikgeräte in der selben Weise Auswahlschemata dargeboten. Unabhängig von der zugrundeliegenden Funktionalität kann sich der Benutzer damit in einfacher Weise mit der jeweiligen Gerätefunktionalität zurechtfinden.

Die Auswahl eines der jeweils angezeigten Menüpunkte trifft der Benutzer über die Fernbedienung 150. Entsprechend zu der dem Benutzer in einfacher Weise dargebotenen Steuerungsoptionen ist die Fernbedienung 150 vorzugsweise mit Scroll-Tasten oder einem Drehrad versehen. Ein Beispiel für eine Ausgestaltung des Bedienfeldes der Fernbedienung 150 ist in Fig. 5 wiedergegeben.

Das in Fig. 5 dargestellte Bedienfeld 500 enthält ein Drehrad 510. Optional sind zwei weitere Tasten 520 und 530 vorgesehen. Die Taste 520 ermöglicht eine Rückkehr zur nächsthöheren Navigationsebene. Die Taste 530 ermöglicht die Rückkehr ins Ausgangsmenü. Alternativ können entsprechende Navigationsoptionen auch über das Anzeigesignal dem Benutzer zur Verfügung gestellt werden.

Das zentrale Element der Fernbedienung ist das Drehrad 510. Über Drehen des Rades nach oben und unten kann der Benutzer jeweils einen der angezeigten Menüpunkte auswählen. Die zunächst provisorisch getroffene Auswahl wird durch eine entsprechende Markierung oder Hervorhebung in der Anzeige dem Benutzer verdeutlicht. Durch Drücken des Drehrades 510 wird diese Option ausgewählt, so dass entweder die darunter liegende Navigationsebene mit weiteren Optionen oder die ausgewählte Operation durchgeführt wird. Alternativ kann die Aktivierung einer Auswahl auch in anderer Weise realisiert werden, beispielsweise über eine separat zu bedienende Taste.

Der besondere Vorteil eines solchermaßen gestalteten Bedienfeldes ist, dass es in einfacher Weise mit einem Finger, vorzugsweise dem Daumen, bedienbar ist. Ohne auf die Fernbedienung sehen zu müssen, kann der Benutzer im Gegensatz zu herkömmlichen Fernbedienungen in einfacher Weise das Multifunktionsgerät steuern. Ein Erklärungsbedarf zur Benutzung der auf einer Fernbedienung vorgesehenen Tasten ist nicht mehr erforderlich.

Vorzugsweise ist die Fernbedienung als Funkfernbedienung ausgebildet. Im Gegensatz zu herkömmlichen, infrarotbasierten Fernbedienungen benötigt die Funk-Fernbedienung weder Sichtkontakt zum Gerät, noch muss das Gerät so aufgestellt werden, dass der Empfangssensor einen Großteil des Raumes erfasst, damit eine freie Bewegung des Benutzers im Raum möglich ist. Anders als herkömmliche Konsumerelektronikgeräte kann das erfindungsgemäße Audio/Videosignal-Verarbeitungsgerät deshalb auch verdeckt aufgestellt werden. Außerdem erfordert die Funkfernbedienung beim Betrieb nicht, dass der Benutzer beim Drücken einer Taste mit der Fernbedienung auf das zu steuernde Gerät zielen muß.

Die Mensch-Maschine-Schnittstelle 118 weist eine entsprechende Funkempfangseinheit 340 auf, die die Auswahlsignale des Benutzers von der Fernbedienung 150 empfängt. Diese Signale werden in einem Converter 350 in einen entsprechenden Modulsteuerbefehl umgesetzt. Dazu wird die entsprechende Auswahl des Benutzers in Abhängigkeit von dem in einem Statusregister 370 gespeicherten, aktuell aktivierten Modul ein entsprechender Steuerbefehl erzeugt, der an das jeweilige Modul weitergeleitet wird. Für den Fall, dass die ausgewählte Navigationsebene eine weitere Auswahl durch den Benutzer erforderlich macht, wird die getroffene Auswahl an die Menüführungseinheit 310 weitergeleitet.

Nach dem Einschalten des Multifunktionsgerätes wird dem Benutzer zunächst die oberste Navigationsebene angezeigt. In dieser Ebene kann der Benutzer eine Option aus einer Auswahlliste auswählen, die unterschiedliche Konsumerelektronikfunktionalitäten anbietet, wobei jede Option jeweils im wesentlichen einem herkömmlichen Konsumerelektronikgerät entspricht.

Beispiele für die oberste Navigationsebene, die der Benutzer immer wieder durch Drücken der Taste "Menü" 530 erreichen kann, ist in den Fig. 6 und 7 dargestellt. Diese Ebene wird durch Drücken der Taste 530 auch während der Durchführung einer Anwendungsoperation aktiviert. Der Benutzer kann so sehr schnell eine aktuell ausgewählte Anwendung des Multifunktionsgerätes wechseln. Über eine Logiksteuerung wird bei Inkompatibilität der ausgewählten Anwendungsoperationen die vorherige Anwendung automatisch abgeschaltet und die neue aktiviert. Verschiedene Anwendungen sind aber durchaus auch gleichzeitig aktivierbar. Beispielsweise kann gleichzeitig eine Aufzeichnung eines aktuellen Fernsehprogramms auf der Festplatte mit einer anderen Operation, beispielsweise einer Musikwiedergabe oder der Verwaltung von Audio- oder Videodateien, durchgeführt werden.

In den Fig. 6 und 7 ist beispielhaft gezeigt, wie der Benutzer zwischen den untereinander dargestellten Auswahloptionen wählen kann. Während in Fig. 6 der Auswahlzeiger auf "Fernsehen" steht, ist er in Fig. 7 auf "Video" eingestellt. Durch Drücken des Drehrades 510 der Fernbedienung wird die jeweils eingestellte Option ausgewählt und ein weiteres Auswahlbild zur Aktivierung des nun von dem Multifunktionsgerät zu simulierenden Konsumergerätes angezeigt.

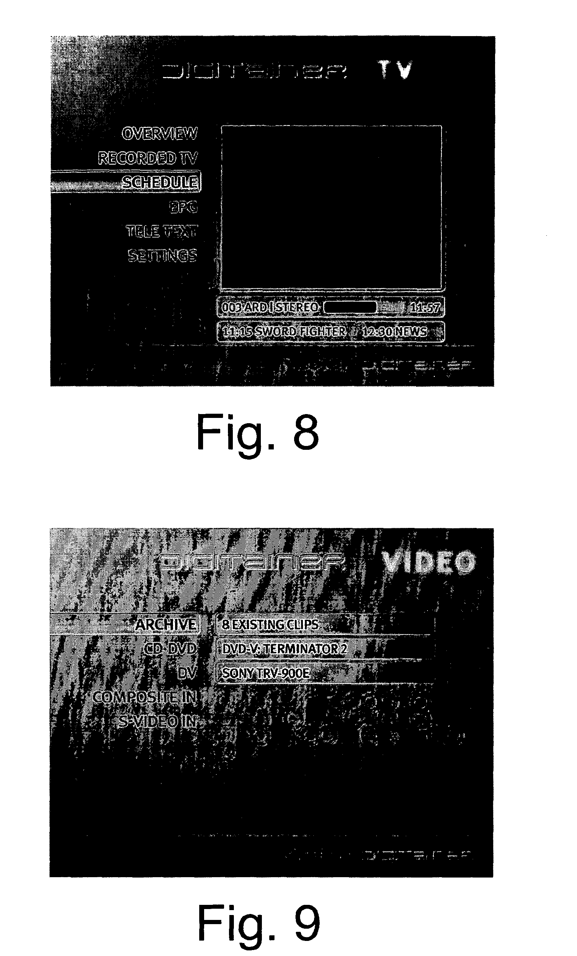

Fig. 8 zeigt einen Überblick über die erste Navigationsebene nach Auswahl der Anwendung "Fernsehen". Der Benutzer kann beispielsweise zwischen den Optionen "aufgezeichnete Fernsehsendungen", "Programmvorschau", "elektronischer Programguide" und "Videotext" auswählen.

Wenn möglich, wird dem Benutzer in Abhängigkeit von dem aktuell markierten Auswahlmenüpunkt zusätzliche Information angezeigt. Diese Information kann dem Benutzer eine Vorschau auf die Operation oder Inhalte des betreffenden Menüpunktes angeben. Alternativ kann in jedem Anzeigebild die zu jedem Auswahlmenüpunkt verfügbare Zusatzinformation gleichzeitig angezeigt werden, um dem Benutzer die bei jeder Optionen zur Verfügung stehenden Signalquelle o.ä. anzuzeigen.

Beispiele für Auswahllisten nach Auswahl der Anwendung "Video" sind in den Fig. 9 bis 13 wiedergegeben. Die ersten Navigationsebene nach Auswahl der Anwendung "Video" ist in Fig. 9 gezeigt. Der Benutzer erhält eine Übersicht über die möglichen Quellen für Videodaten, nämlich archivierte Videodaten ("archive"), CD/DVD, Camcorder ("DV"), Fernsehsignal ("composite in") und S-Videoeingang.

Solange sich der Auswahlzeiger auf einem Menüpunkt befindet, ohne dass dieser Menüpunkt tatsächlich ausgewählt ist, werden dem Benutzer wiederum Zusatzinformationen zu diesem Menüpunkt (oder zu allen Menüpunkten) angezeigt. Wie in Fig. 9 dargestellt, hat der Benutzer aktuell acht Videoclips in der Archivierungseinrichtung gespeichert. Zusätzlich werden dem Benutzer in diesem Fall unabhängig von der Stellung des Auswahlzeigers Zusatzinformationen zu dem optischen Speicherlaufwerk ("CD/DVD") und zu dem Anschluss eines Camcorders gezeigt. Gemäß dem dargestellten Beispiel ist in dem DVD-Laufwerk eine Video-DVD mit dem Titel "Terminator 2" eingelegt und an den DV-Anschluss ein Camcorder des Typs "Sony TRF 900E" angeschlossen.

In entsprechender Weise kann auch auf Daten zugegriffen werden, die sich auf einem Gerät befinden, das über ein Netzwerk angeschlossen ist, oder die über das Internet erreichbar sind.

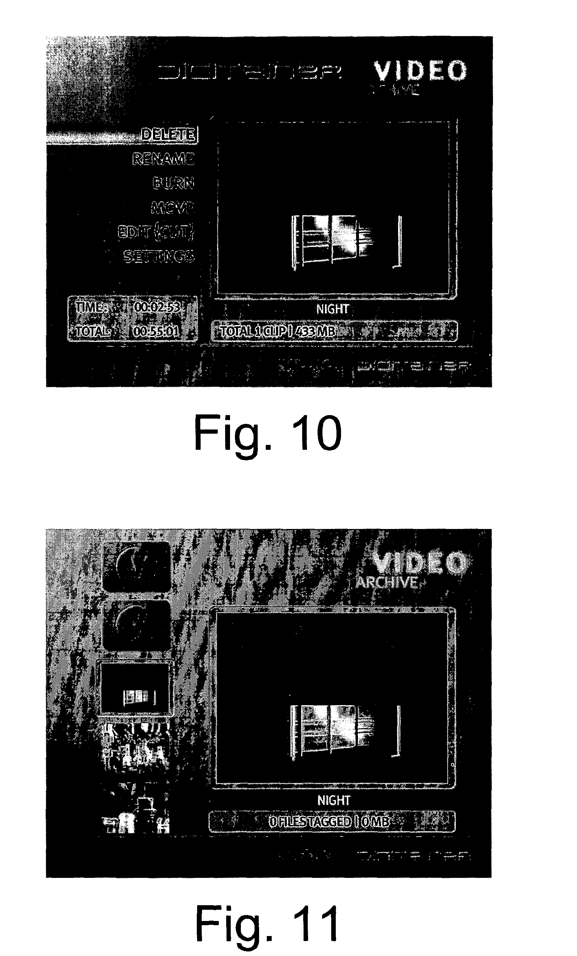

Um dem Benutzer die Navigation zu erleichtern, wird ihm jeder wesentliche Navigationsschritt visuell angezeigt, insbesondere die jeweils aktuell ausgewählte Navigationsebene. Nachdem der Benutzer die erste Navigationsebene verlassen hat, wird in dem wiedergegebenen Beispiel rechts oben im angezeigten Bild die aktuelle Navigationssituation angezeigt, nämlich "TV" (Fig. 8) bzw. "Video" (Fig. 9). Wählt der Benutzer nun den Menüpunkt "Archiv" aus, so wird, wie in Fig. 10 gezeigt, zusätzlich zu dem Begriff "Video" der Begriff "Archiv" eingeblendet. Dem Benutzer werden nun die für das Archiv zur Verfügung stehenden Operationen wie Datei löschen ("delete"), Datei umbenennen ("rename"), Datei verschieben ("move") oder Datei editieren/schneiden angeboten.

Bei dem in Fig. 10 gezeigten Beispiel steht der Auswahlzeiger auf "delete". Dem Benutzer wird daneben gleichzeitig ein Ausschnitt der ausgewählten Videosequenz und weiterer Details wie Titel und Größe der zu löschenden Datei angezeigt.

Fig. 11 zeigt einen Auswahlbildschirm zur Auswahl einer Videosequenz, auf die eine Bearbeitungsoperation angewandt werden soll. Eine Vorschau zeigt einen Ausschnitt der ausgewählten Videosequenz.

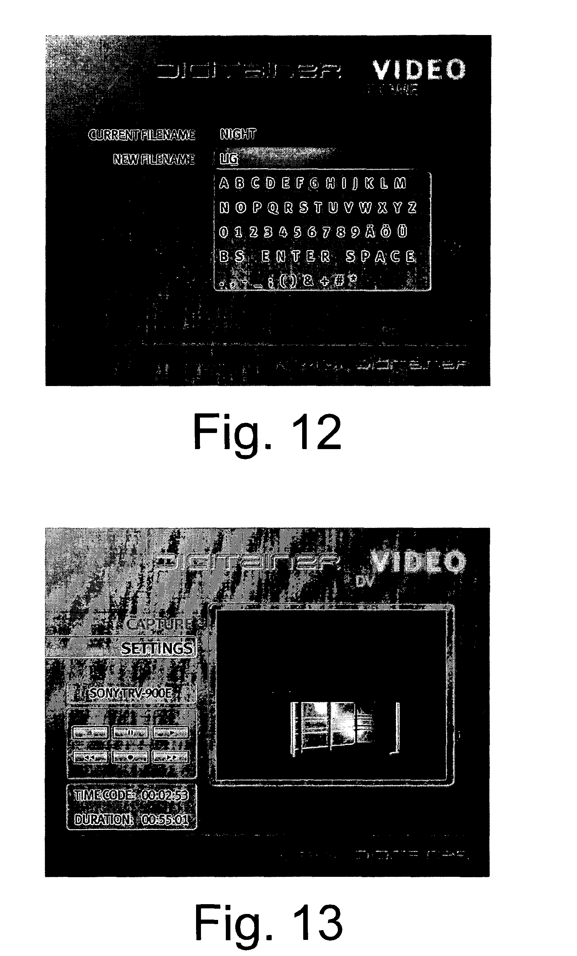

In Fig. 12 ist ein Auswahlbildschirm gezeigt, bei dem der Benutzer einer Videosequenz einen neuen Namen geben kann. Anstelle einer vertikalen Anordnung der auszuwählenden Zeichen zur Umbenennung des Dateinamens der Videosequenz ist in diesem Fall eine horizontale Anordnung der Buchstaben, Zahlen und Sonderzeichen gewählt. Der Benutzer bewegt sich durch Drehen des Drehrades 510 sequentiell durch die einzelnen Zeilen der Zeichen von "A" am Anfang der ersten Zeile bis zu "*" am Ende der letzten Zeile. Durch Drücken des Auswahlrades wird das jeweils hervorgehobene Zeichen in den neuen Dateinamen übernommen.

Fig. 13 zeigt ein Beispiel für die Steuerung eines an das Multifunktionsgerät angeschlossenen Camcorders, in diesem Fall vom Typ Sony TRV-900E. Zur Steuerung des Gerätes ist ein Bedienfeld eingeblendet, dessen Tasten ebenfalls über das Drehrad ausgewählt und aktiviert werden.

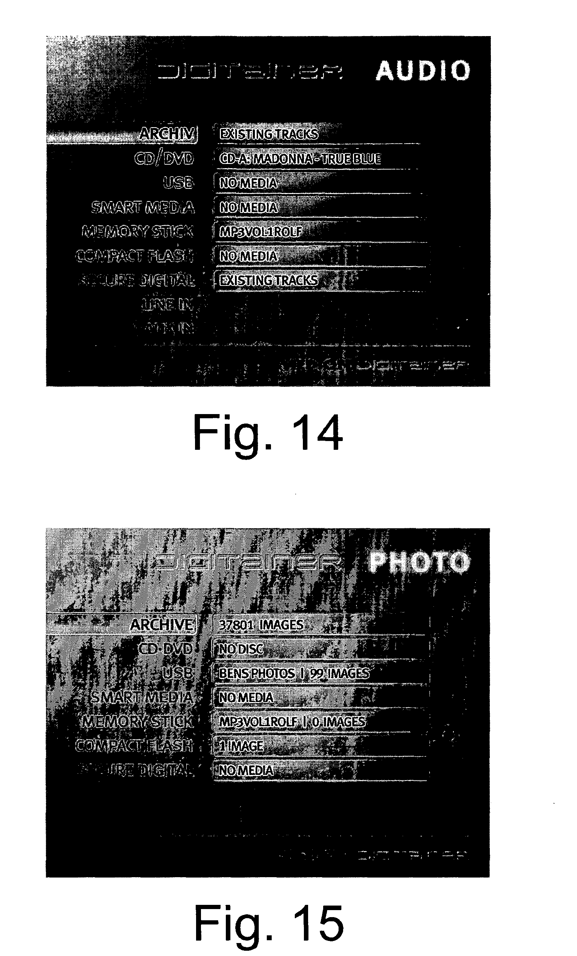

In den Fig. 14 bis 18 sind weitere Beispiele anderer Funktionsbereiche des Gerätes angegeben. Fig. 14 zeigt ein Beispiel für die Verwaltung von Audiodaten. Audiodaten können auf der Festplatte archiviert sein, über eine CD/DVD, eine USB-Schnittstelle oder Speicherkarten zugeführt werden. Bei der in Fig. 14 dargestellten Anzeigeform ist zu jedem Menüpunkt angegeben, ob Dateien vorhanden sind und wenn, welche. Mit solchen Zusatzangaben wird dem Benutzer auf einen Blick die Auswahl des gewünschten Menüpunktes erleichtert.

Eine ähnliche Auswahl wie bei der Verwaltung von Audiodaten und Videodaten wird dem Benutzer bei der Verwaltung und Bearbeitung seiner Fotodateien angeboten, wie in Fig. 15 gezeigt.

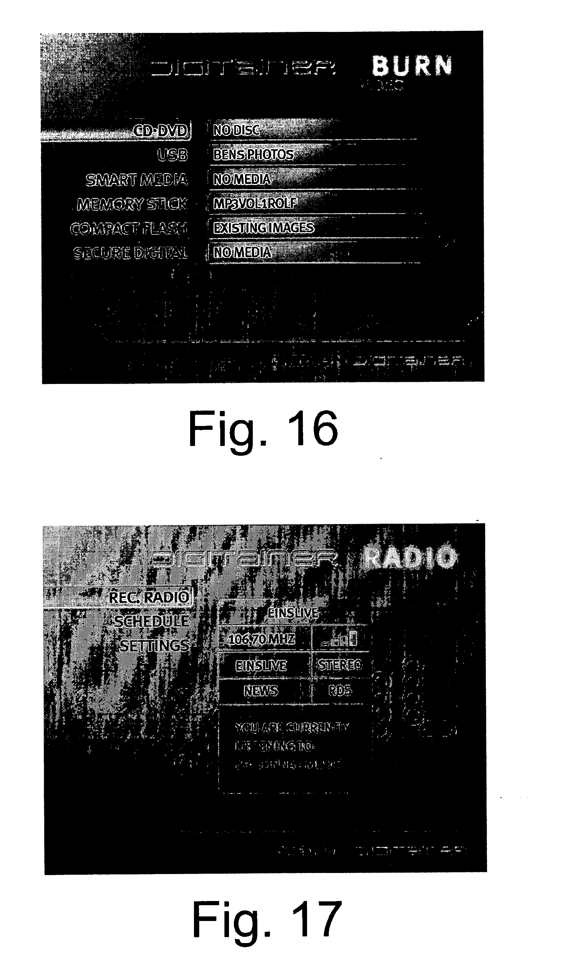

Fig. 16 zeigt nach Auswahl der Anwendung "Aufzeichnen" von "Video" die nachfolgende Menüebene mit dem auszuwählenden Aufzeichnungsmedium. Dem Benutzer werden hier unter anderem die Menüpunkte "optisches Speichermedium", USB-Schnittstelle und verschiedene Speicherkarten angeboten. Dabei wird dem Benutzer angegeben, ob ein Speichermedium eingelegt ist, und welche Dateien auf diesem Speichermedium bereits vorhanden sind.

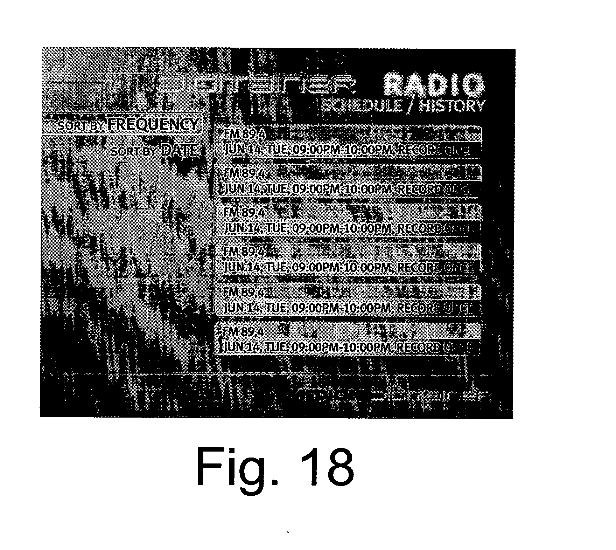

Die Fig. 17 und 18 beziehen sich auf die Anzeige von Benutzerdaten für die Anwendung "Radio". In Fig. 17 ist der Menüpunkt "Record Radio" ausgewählt. Dem Benutzer wird gleichzeitig das aktuell empfangene Radioprogramm mit allen verfügbaren Zusatzinformationen angezeigt. Fig. 18 gibt dem Benutzer einen Überblick über die von ihm zuletzt aufgezeichneten Radioprogramme. Dabei werden dem Benutzer gleichzeitig Details der einzelnen Dateien wie die Sendefrequenz, der Sendetermin und die Sendezeit angezeigt.

Die Menüführung stellt eine für die simulierten Konsumerelektronikgeräte einheitliche und intuitive Benützerführung dar, um die Handhabung des Multifunktionsgeräts besonders einfach und benutzerfreundlich zu gestalten. Durch zusätzliche Maßnahmen erreicht, dass das Multifunktionsgerät bei der Durchführung einer ausgewählten Anwendung auch besonders leise arbeitet, damit die Wahrnehmung der wiedergegebenen Audio- oder Videodaten nicht beeinträchtigt wird.

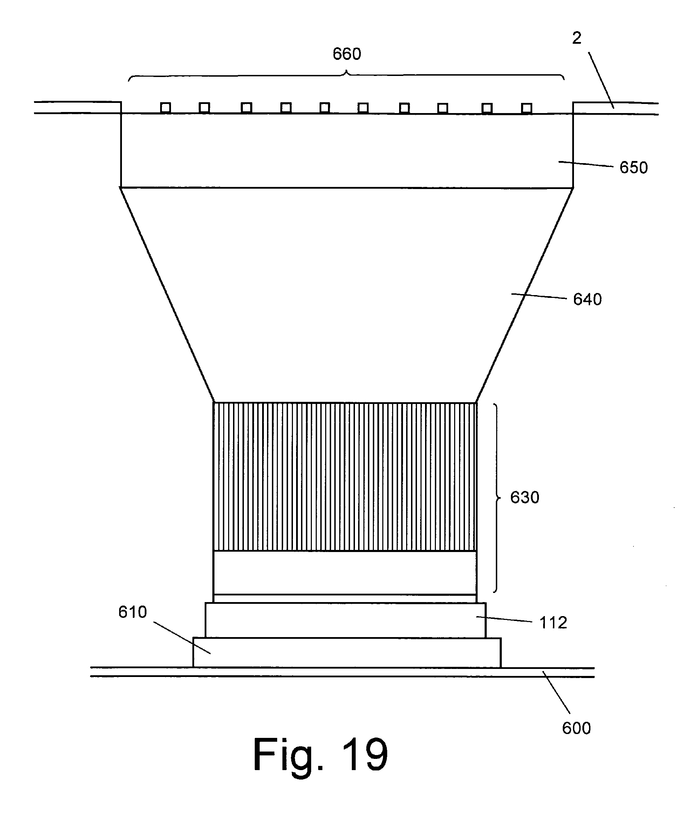

Fig. 19 zeigt eine besondere innere Ausgestaltung des Multifunktionsgerätes zur Kühlung der Prozessor 112. Der Prozessor 620 ist über einen CPU-Sockel 610 auf einer Platine 600 montiert. Auf der CPU 620 ist ein Kühlkörper 630 befestigt. Der Kühlkörper ist vorzugsweise aus Aluminium oder Kupfer hergestellt. Ein Prozessorlüfter 650 führt über einen Luftschacht 640 dem Kühlkörper einen konstanten Luftstrom zu. Der Luftschacht ist mit einer im Gehäuse 2 vorgesehenen Ansaugöffnung 660 für Außenluft verbunden. Auf diese Weise wird dem Kühlkörper ständig Außenluft zugeführt. Die Umgebungsluft des Gerätes ist im Allgemeinen deutlich kühler als die Luft, die sich innerhalb des Gerätes befindet, und zwar um ca. 10°C. Auf diese Weise kann der Prozessorlüfter 650 mit einer niedrigen Umdrehungszahl betrieben werden, so dass seine Geräuschentwicklung dementsprechend gering ist.

Zusätzlich ist der Luftschacht 640 konisch ausgebildet, und zwar so, dass sein Querschnitt in Richtung Ansaugöffnung 660 im Gehäuse 2 zunimmt. Der Prozessorlüfter 650 ist direkt hinter der Gehäuseöffnung 660 angeordnet, und weist damit einen deutlich größeren Querschnitt als der Kühlkörper 630 auf. Durch diese Ausgestaltung von Luftschacht 640 und Prozessorlüfter 650 kann die Umdrehungszahl des Prozessorlüfters weiter vermindert und die Geräuschentwicklung dementsprechend reduziert werden.

Für den Lüfter gibt es eine elektronische Drehzahlreglung. Die Führungsgröße ist die Chiptemperatur der CPU. Mit der Lüfterreglung wird sichergestellt, dass der Lüfter nur so schnell wie nötig läuft. Sie sorgt dafür, dass die CPU nicht außerhalb der Grenzen ihrer thermischen Spezifikation betrieben wird und immer nur die geringstmögliche Geräuschbelästigung auftritt.

Eine der Prozessorkühlung entsprechende Anordnung ist zur Kühlung des Netzteils 18 vorgesehen. Auch dem Netzteil 18 wird vorzugsweise Außenluft über einen konisch geformten Luftschacht zugeführt. Über eine elektronische Drehzahlregelung ist auch der Netzteillüfter immer mit einer möglichst geringen Drehzahl betreibbar, so dass die Geräuschemissionen des Lüfters immer am erreichbaren Minimum liegen.

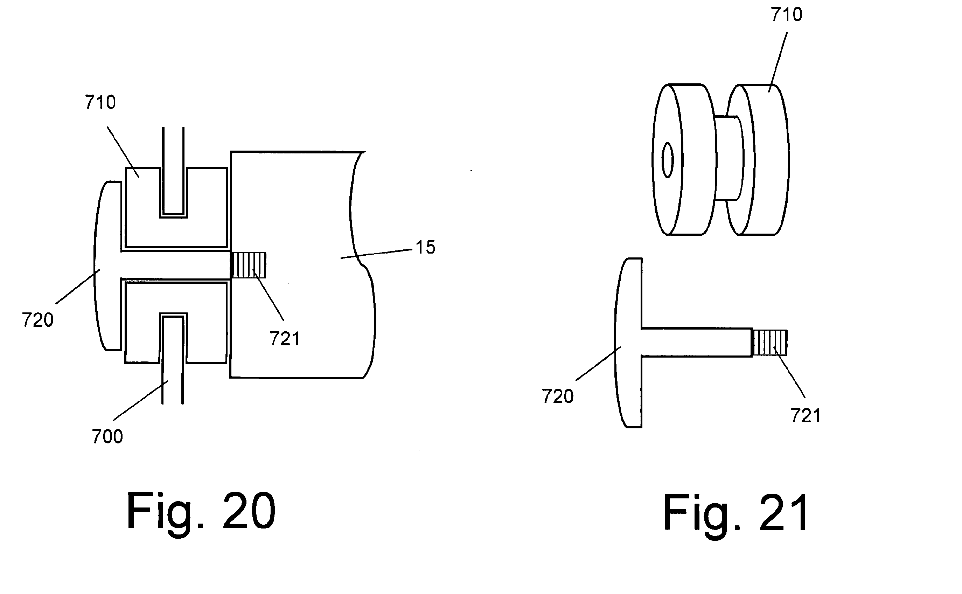

Eine weitere Maßnahme zur Reduzierung von Geräuschemission ist in den Fig. 20 und 21 gezeigt. Vibrationen der motorisch betriebenen Laufwerke 15 des Multifunktionsgerätes können sich über das Gehäuse 2 als Resonanzkörper als störende Geräuschemissionen bemerkbar machen.

Um die Übertragung von Vibrationen von den motorisch betriebenen Laufwerken auf das Gehäuse zu unterbinden, werden die Laufwerke über Dämpfungselemente in dem Gehäuse befestigt. Zu diesem Zweck ist das in einem Einbauschacht 700 eingesetzte Laufwerk 15 über Dämpfungsmittel 710 in dem Einbauschacht fixiert. Die Dämpfungsmittel 710 sind so ausgebildet, dass eine mechanische feste Verbindung zwischen dem Befestigungsmittel 720 und dem Einbauschacht 700 unterbunden wird. Die Ausgestaltung der Befestigung ist im Detail in Fig. 21 gezeigt.

Die Schraube 720 ist über ein Gewinde 721 fest mit dem mechanischen Laufwerk 15 verbunden. Gleichzeitig ist die Schraube 720 über das Dämpfungselement 710 in vibrationsunterdrückender Weise in der Laufwerksaufnahme 700 montiert. Mit einem solchermaßen gedämpften mechanischen Laufwerk 15 ist die Gefahr störender Geräuschemissionen durch die Übertragung von Vibrationen auf das Gehäuse 2 minimiert.

Selbstverständlich ist eine Vielzahl alternativer Befestigungen möglich, die eine feste mechanische Verbindung zwischen Laufwerk und Gehäuse vermeiden, wobei immer ein Dämpfungselement verwendet wird. In Fig. 20 und 21 ist nur eine beispielhafte Ausgestaltung angegeben. Auch die konkrete mechanische Befestigung des Laufwerks in dem Einbauschacht kann in einer Vielzahl von Varianten erfolgen, beispielsweise auch über eine an dem Laufwerk befestigte Schiene aus Kunststoff. Die Schiene ist vorzugsweise über die Dämpfungselemente an dem Laufwerksgehäuse befestigt.

Zusammenfassend betrifft die vorliegende Erfindung ein Audio/Videosignal-Verarbeitungsgerät, das in kompakter Weise eine Vielzahl von herkömmlichen Konsumerelektronikgeräten in einem einzigen Gerät integriert. Dabei wird die Rechenleistung eines zentralen Prozessors allen Modulen des AudioNideosignal-Verarbeitungsgeräts zur Verfügung gestellt. Der erfindungsgemäße Ansatz ermöglicht, einen großen Umfang unterschiedlicher Konsumerelektronik-Funktionalitäten in einem Gerät zu vereinen. Durch die Integration der Mehrzahl von Geräten bzw. Anwendungen in einem Gehäuse mit gemeinsamer Nutzung unterschiedlicher Speichermedien werden zum ersten Mal für viele der Anwendungen neue Nutzungsmöglichkeiten erschlossen. Durch die einheitliche Verwendung von Speichermedien, zentraler Recheneinheit, elektrischer Kommunikationsschnittstelle und der Benutzerschnittstelle kann der Hardwareaufwand minimiert und die Bedienerfreundlichkeit durch Verwendung einer einheitlichen Benutzeroberfläche deutlich verbessert werden. Der modulare Aufbau der Anwendungsfunktionen ermöglicht eine kostengünstige und flexible Anpassung an neue Technologien und neue Standards. Zudem ist die Gerätekonfiguration in einfacher Weise an lokale Gegebenheiten anpassbar.

## Patentansprüche

1. AudioNideosignal-Verarbeitungsgerät für eine Mehrzahl verschiedener Audio- und/oder Videosignalverarbeitungsoperationen mit einem Gehäuse (2), einer in dem Gehäuse (2) angeordneten Zentraleinheit (110), einer Mehrzahl von in dem Gehäuse (2) vorgesehenen Signalverarbeitungsmodulen (12) für Audio- und/oder Videosignalverarbeitungsoperationen und einer Bedieneinheit, wobei die Zentraleinheit (110) umfaßt:
einen Prozessor (112) zur Durchführung von Rechenoperationen für eine Audio- und/oder Videosignalverarbeitungsoperation in Abhängigkeit von einem aktivierten Signalverarbeitungsmodul der Mehrzahl von Signalverarbeitungsmodulen (12),
eine Archivierungseinrichtung (116) zur Speicherung von Audio- und Videosignalen,
eine Mensch-Maschine-Schnittstelle (118) mit einer Einrichtung (320) zur Erzeugung eines Anzeigesignals für eine gemeinsame visuelle Benutzerführung für die Audio- und/oder Videosignalverarbeitungsoperationen der Mehrzahl von Signalverarbeitungsmodulen, einer Einrichtung (340) zur Erfassung von Benutzeroperationen von der Bedieneinheit (150) zur Steuerung der Audio- und/oder Videosignalverarbeitung und einer Einrichtung (350) zur entsprechenden Ansteuerung eines der Mehrzahl von Signalverarbeitungsmodulen (12) und
eine I/O-Kommunikationsschnittstelle (114) zum Empfang von zu verarbeitenden Audio- und/oder Videosignalen und zur Ausgabe von Audio- und/oder Videosignalen einschließlich des Anzeigesignals für die visuelle Benutzerführung an eine an die I/O-Kommunikationsschnittstelle (114) anschließbare Wiedergabevorrichtung (330).

2. Audio/Videosignal-Verarbeitungsgerät nach Anspruch 1, wobei Archivierungseinrichtung (116) ein Festplattenlaufwerk ist.

3. Audio/Videosignal-Verarbeitungsgerät nach Anspruch 1 oder 2, wobei die I/O-Kommunikationsschnittstelle (114) Anschlüsse (16, 17) für wenigstens einen der Schnittstellenstandards PCI, USB, Firewire oder RS232, für ein drahtloses und/oder drahtgebundenes LAN / WLAN Netzwerk_und/oder für das Internet ein analoges Modem, einen ISDN-Anschluß oder einen ADSL-Anschluß aufweist.

4. Audio/Videosignal-Verarbeitungsgerät nach einem der Ansprüche 1 bis 3, wobei die I/O-Kommunikationsschnittstelle (114) modular aufgebaut ist.

5. Audio/Videosignal-Verarbeitungsgerät nach einem der Ansprüche 1 bis 4, wobei Anschlüsse (17) der I/O-Kommunikationsschnittstelle (114) für eine dauernde Geräteverbindung auf der Gehäuserückseite angeordnet sind und Anschlüsse (16) der I/O-Kommunikationsschnittstelle (114) für eine vorrübergehende Geräteverbindung auf der Gehäusevorderseite angeordnet sind.

6. Audio/Videosignal-Verarbeitungsgerät nach einem der Ansprüche 1 bis 5, wobei die I/O-Kommunikationsschnittstelle (114) zumindest einen Ausgangsanschluß für ein Fernsehgerät oder einen Monitor zur Wiedergabe eines Videosignals enthält.

7. AudioNideosignal-Verarbeitungsgerät nach einem der Ansprüche 1 bis 6, wobei die Einrichtung (320) zur Erzeugung eines Anzeigesignal eine On-Screen-Display-Einheit ist.

8. Audio/Videosignal-Verarbeitungsgerät nach Anspruch 7, wobei das Anzeigesignal für die visuelle Benutzerführung eine Auflistung von Auswahloptionen darstellt.

9. AudioNideosignal-Verarbeitungsgerät nach einem der Ansprüche 1 bis 8, wobei nach dem Einschalten dem Benutzer eine Auswahlliste zur Auswahl einer AudioNideosignalverarbeitungsfunktionalität angezeigt wird.

10. AudioNideosignal-Verarbeitungsgerät nach einem der Ansprüche 1 bis 9, wobei die Bedieneinheit (150) eine Auswahleinrichtung zur Auswahl einer der angezeigten Auswahloptionen ist.

11. AudioNideosignal-Verarbeitungsgerät nach einem der Ansprüche 1 bis 10, wobei die Bedieneinheit (150) eine Fernbedienung, insbesondere eine Funkfernbedienung, ist.

12. Audio/Videosignal-Verarbeitungsgerät nach Anspruch 11, wobei die Fernbedienung (150) ein manuell bedienbares Drehrad (510) zur Auswahl einer der dargestellten Auswahloptionen enthält.

13. AudioNideosignal-Verarbeitungsgerät nach Anspruch 11, wobei die Fernbedienung (150) manuell bedienbare Scroll-Tasten enthält.

14. AudioNideosignal-Verarbeitungsgerät nach einem der Ansprüche 8 bis 13, wobei die visuelle Benutzerführung für alle Signalverarbeitungsmodule (12) über Auswahllisten erfolgt.

15. AudioNideosignal-Verarbeitungsgerät nach einem der Ansprüche 1 bis 14, wobei die Mensch-Maschine-Schnittstelle (118) eine Speichereinrichtung (370) zur Speicherung von der für die Benutzerführung und Bedienung erforderlichen Statusinformation in Abhängigkeit von den im Gehäuse (2) vorgesehenen Signalverarbeitungsmodulen (12) enthält.

16. Audio/Videosignal-Verarbeitungsgerät nach einem der Ansprüche 1 bis 15, wobei die Mensch-Maschine-Schnittstelle (118) von der Bedieneinheit (150) empfangene Signale in Abhängigkeit von dem jeweils aktiven Signalverarbeitungsmodul (12) in modulspezifische Steuerungsbefehle für das jeweils aktive Signalverarbeitungsmodul (12) umsetzt.

17. AudioNideosignal-Verarbeitungsgerät nach einem der Ansprüche 1 bis 16, wobei die Statusinformation das jeweils aktive Signalverarbeitungsmodul (12) angibt.

18. Audio/Videosignal-Verarbeitungsgerät nach einem der Ansprüche 1 bis 17, wobei der Prozessor (112) der Zentraleinheit (110) alle AudioNideorechenoperationen ausführt.

19. Audio/Videosignal-Verarbeitungsgerät nach einem der Ansprüche 1 bis 18, wobei der Prozessor (112) der Zentraleinheit (110) gleichzeitig eine Mehrzahl von unterschiedlichen Audio/Videorechenoperationen bearbeitet.

20. Audio/Videosignal-Verarbeitungsgerät nach einem der Ansprüche 1 bis 19, die außerdem einen Lüfter (650) zur Anströmung einer Komponente des Audio/Videosignal-Verarbeitungsgerätes mit Kühlluft enthält.

21. Audio/Videosignal-Verarbeitungsgerät nach Anspruch 20, wobei der Lüfter ein Prozessorlüfter (650) zur Anströmung des Prozessors (112) mit Kühlluft ist.

22. Audio/Videosignal-Verarbeitungsgerät nach Anspruch 20, wobei der Lüfter ein Netzteillüfter zur Anströmung des Netzteils (18) mit Kühlluft ist.

23. Audio/Videosignal-Verarbeitungsgerät nach einem der Ansprüche 19 bis 21, wobei der Lüfter (650) direkt am Gehäuse (2) angeordnet ist.

24. AudioNideosignal-Verarbeitungsgerät nach Anspruch 23, das außerdem einen Luftschacht (640) zur Verbindung des Lüfters (650) mit dem Gehäuse (2) zur Zuführung von Außenluft zu der zu kühlenden Komponente umfaßt.

25. Audio/Videosignal-Verarbeitungsgerät nach Anspruch 24, wobei der Luftschacht (640) eine konische Form aufweist.

26. Audio/Videosignal-Verarbeitungsgerät nach einem der Ansprüche 21 bis 25, wobei der Prozessorlüfter (650) einen größeren Querschnitt als der Prozessor (112) aufweist.

27. AudioNideosignal-Verarbeitungsgerät nach einem der Ansprüche 20 bis 26, wobei der Lüfter (650) einen Querschnitt größer als 45x45mm aufweist.

28. Audio/Videosignal-Verarbeitungsgerät nach einem der Ansprüche 20 bis 27, wobei der Lüfter (650) mit einer Drehzahl kleiner als 3000 U/min betrieben wird.

29. Audio/Videosignal-Verarbeitungsgerät nach einem der Ansprüche 20 bis 28, wobei die Drehzahl des Lüfters (650) in Abhängigkeit von der Temperatur der zu kühlenden Komponente, insbesondere des Prozessors (112) oder des Netzteils (18) geregelt ist.

30. Audio/Videosignal-Verarbeitungsgerät nach einem der Ansprüche 1 bis 29, wobei in dem Gehäuse (2) vorgesehene mechanischen Laufwerke (15) über Dämpfungselemente (710) befestigt sind.

31. Audio/Videosignal-Verarbeitungsgerät nach Anspruch 30, wobei das mechanische Laufwerk (15) ein optisches Laufwerk, insbesondere ein DVD-Laufwerk oder ein CD-Laufwerk oder ein Festplattenlaufwerk ist.

32. Audio/Videosignal-Verarbeitungsgerät nach Anspruch 30 oder 31, wobei die Dämpfungselemente (710) aus Gummi hergestellt sind.

33. Audio/Videosignal-Verarbeitungsgerät nach einem der Ansprüche 30 bis 32, wobei das mechanische Laufwerk (15) über eine Kunststoffschiene in das Gehäuse (2) einsetzbar ist und die Kunststoffschiene über Gummipuffer (710) an dem mechanischen Laufwerk (15) befestigt ist.

34. Audio/Videosignal-Verarbeitungsgerät nach einem der Ansprüche 1 bis 33, wobei das Gehäuse (2) eine Mehrzahl von Steckplätzen (13) zum Einsetzen von Signalverarbeitungsmodulen (12) in Form von Steckkarten und eine Mehrzahl von Einschubplätzen zum Einsetzen von mechanischen Laufwerken (15) aufweist.

35. Audio/Videosignal-Verarbeitungsgerät nach Anspruch 34, wobei die Steckund Einschubplätze jeweils einem Standardformfaktor entsprechen.

36. Audio/Videosignal-Verarbeitungsgerät nach Anspruch 35, wobei der Standardformfaktor für Signalverarbeitungsmodule (12) der PCI-Standard, der Mini PCI-Standard und/oder der AGP-Standard ist.

37. Audio/Videosignal-Verarbeitungsgerät nach Anspruch 35 oder 36, wobei der Standardformfaktor für mechanische Laufwerke der 5 1/4 Zoll Standard, der 3,5" Standard, der 3" Standard oder der 2,5" Standard ist.

38. Audio/Videosignal-Verarbeitungsgerät nach einem der Ansprüche 1 bis 37, wobei ein Signalverarbeitungsmodul (12) die Audio- und/oder Videosignalanwendung eines herkömmlichen Audio- oder Videogerätes simuliert.

39. Audio/Videosignal-Verarbeitungsgerät nach einem der Ansprüche 1 bis 38, wobei die in dem Gehäuse (2) angeordneten Signalverarbeitungsmodule (12) ein Fernsehmodul (131), ein Videomodul (132), ein CD/DVD-Modul (133), ein Audiomodul (134), ein Radiomodul (135), ein Fotomodul (136) und/oder ein Aufzeichnungsmodul (137) umfassen.

40. Audio/Videosignal-Verarbeitungsgerät nach Anspruch 39, wobei das Fernsehmodul (131) analoges Fernsehmodul und/oder ein digitales Fernsehmodul ist.

41. Audio/Videosignal-Verarbeitungsgerät nach Anspruch 40, wobei das Fernsehmodul (131) analoges Fernsehmodul zum Empfang von Fernsehsignalen nach dem NTSC-, PAL- und/oder SECAM-Standard ist.

42. AudioNideosignal-Verarbeitungsgerät nach Anspruch 40, wobei das Fernsehmodul (131) digitales Fernsehmodul zum Empfang von Fernsehsignalen nach dem DVB-Standard ist.

43. Audio/Videosignal-Verarbeitungsgerät nach einem der Ansprüche 40 bis 42, wobei das Fernsehmodul (131) zur Empfang von über Satellit, Kabel und/oder terrestrisch ausgestrahlten Fernsehsignalen ausgebildet ist.

44. AudioNideosignal-Verarbeitungsgerät nach einem der Ansprüche 40 bis 43, wobei das Fernsehmodul (131) zur Verarbeitung von HDTV-Signalen ausgebildet ist.

45. Audio/Videosignal-Verarbeitungsgerät nach einem der Ansprüche 39 bis 44, wobei das Radiomodul (135) ein analoges und/oder digitales Radiomodul ist.

46. Audio/Videosignal-Verarbeitungsgerät nach Anspruch 45, wobei das Radiomodul (135) zur Verarbeitung von gemäß dem DAB-Standard ausgestrahlten Radiosignalen eingerichtet ist.

47. Audio/Videosignal-Verarbeitungsgerät nach einem der Ansprüche 39 bis 46, wobei das Aufzeichnungsmodul (137) eine Aufzeichnung von Daten auf einem optischen Speichermedium, insbesondere einer CD-, einer DVD oder HD-DVD, ermöglicht.

48. Audio/Videosignal-Verarbeitungsgerät nach Anspruch 47, wobei das Aufzeichnungsmodul (137) zur Wiedergabe von auf dem optischen Speichermedium aufgezeichneten Daten als auch zur Aufzeichnung von Daten auf dem optischen Speichermedium in der Lage ist.

49. AudioNideosignal-Verarbeitungsgerät nach einem der Ansprüche 39 bis 48, wobei das Aufzeichnungsmodul (137) ein magnetisches Speicherlaufwerk, insbesondere ein Festplattenlaufwerk, ein Mini-Disk-Laufwerk oder ein Flash Speicher Laufwerk ist

50. Audio/Videosignal-Verarbeitungsgerät nach einem der Ansprüche 39 bis 49, wobei das Videomodul (132) zum Decodieren von codierten Audio- und/oder Videodaten und/oder zum Codieren von Audio- und/oder Videodaten eingerichtet ist.

51. Audio/Videosignal-Verarbeitungsgerät nach Anspruch 50, wobei das Videomodul (132) zur Verarbeitung von Videosignalen nach dem Codierstandard MPEG, DVC-Pro, H.26x., JPEG, Motion-JPEG, und/oder JPEG-2000 und/oder zur Verarbeitung von Audiosignalen nach dem Standard MP3, WMA, AC3, und/oder AVI eingerichtet ist.

52. Audio/Videosignal-Verarbeitungsgerät nach einem der Ansprüche 39 bis 51, wobei das Audiomodul (134) zum Decodieren von codierten Audiodaten und/oder zum Codieren von Audiodaten eingerichtet ist.

53. AudioNideosignal-Verarbeitungsgerät nach Anspruch 52, wobei das Audiomodul (134) zur Verarbeitung von Audiosignalen nach einem dem Standards MP3, WMA, AC3, und/oder AVI eingerichtet ist.

54. Audio/Videosignal-Verarbeitungsgerät nach einem der Ansprüche 39 bis 53, wobei das Videomodul (132) und/oder das Audiomodul (134) zur Archivierung von Video- und/oder Audiodaten eingerichtet sind.

55. Audio/Videosignal-Verarbeitungsgerät nach einem der Ansprüche 39 bis 54, wobei das Fotomodul (136) zum Decodieren, Codieren, Bearbeiten und Archivieren von Bilddaten in der Lage ist.

56. Audio/Videosignal-Verarbeitungsgerät nach einem der Ansprüche 1 bis 55, wobei die I/O-Kommunikationsschnittstelle (114) einen Ausgabeanschluß für Konsumerelektronik-Anzeigegeräte (330) umfasst, insbesondere einen SCART-, FBAS und/oder S-Video-Anschluß.
